# EUROPÄISCHE PATENTSCHRIFT

(11) **EP 2 879 985 B1**
(45) Veröffentlichungstag und Bekanntmachung des Hinweises auf die Patenterteilung: **11.04.2018**
(21) Anmeldenummer: 13745084.7
(22) Anmeldetag: 02.08.2013
(51) Int. Cl.: B67B 3/20, B67B 7/18, G01N 35/04

(54) **VORRICHTUNG ZUM AUTOMATISIERTEN HERSTELLEN UND LÖSEN VON SCHRAUBVERBINDUNGEN**
DEVICE TO AUTOMATICALLY CLOSE AND OPEN SCREW JOINTS
DISPOSITIF POUR VISSER ET DEVISSER AUTOMATIQUEMENT DES CONNEXIONS VISSÉS

(30) Priorität: 03.08.2012 DE 102012213821
(43) Veröffentlichungstag der Anmeldung: 10.06.2015
(73) Patentinhaber: Hamilton Bonaduz AG, 7402 Bonaduz (CH)
(72) Erfinder: GIOVANOLI, Nando, CH-7457 Bivio (CH); STÄDLER, Andreas, CH-7012 Felsberg (CH)
(74) Vertreter: RLTG
(86) Internationale Anmeldenummer: PCT/EP2013/066324
(87) Internationale Veröffentlichungsnummer: WO 2014/020168

(56) Entgegenhaltungen:
- WO-A1-99/28724
- WO-A1-2006/122670
- BE-A- 422 459
- DE-A1- 4 415 227
- DE-C- 662 310
- US-A- 2 655 302
- US-A- 4 089 240
- US-A- 4 696 144
- US-A- 5 520 072
- US-A1- 2011 167 761

## Beschreibung

Die vorliegende Erfindung betrifft eine Vorrichtung zum automatisierten Lösen oder/und Herstellen einer Schraubverbindung zwischen einem ersten und einem zweiten Schraubverbindungsbauteil mit allen Merkmalen des Oberbegriffs von Anspruch 1.

Eine gattungsgemäße Vorrichtung ist aus der US 4 696 144 A bekannt.

Eine weitere Vorrichtung ist aus der EP 0 972 744 A2 bekannt. Diese Druckschrift zeigt eine Vorrichtung zum automatisierten Öffnen von Schraubverschlüssen an Behältern mit einem Behälterkörper und einem Behälterdeckel, wobei die erste Fixiervorrichtung der bekannten Vorrichtung zum Fixieren des Behälterdeckels relativ zur ersten Fixiervorrichtung dient und wobei die zweite Fixiervorrichtung der bekannten Vorrichtung zum Fixieren des Behälterkörpers ausgebildet ist.

Die zweite Fixiervorrichtung der bekannten Vorrichtung ist dabei in Form von Klemmbacken ausgebildet, welche zum Fixieren des Behälterkörpers aneinander angenähert und zum Lösen des Behälterkörpers voneinander entfernt werden können. Um eine möglichst große Angriffsfläche der Klemmbacken der zweiten Fixiervorrichtung am Behälterkörper bereitstellen zu können, sind die Klemmbacken um eine einzige Krümmungsachse gekrümmt ausgebildet, welche parallel zu Schwenkachsen der Klemmbacken orientiert ist. Die Annäherung und Entfernung der Klemmbacken der bekannten Vorrichtung voneinander erfolgt durch Schwenkbewegung der Klemmbacken um die bezeichneten Schwenkachsen. Da die Klemmbacken der bekannten Vorrichtung zum Halten bzw. Greifen oder Fixieren von zylindrischen Behälterkörpern ausgebildet sind, weisen die Klemmbacken eine negativ-teilzylindrische, also konkav-teilzylindrische Greifbakenkontaktfläche auf.

Nachteilig an der bekannten Vorrichtung ist die dort zum erfolgreichen Lösen eines Schraubverschlusses notwendige Anzahl an Antrieben. Die bekannte Vorrichtung weist nämlich einen ersten Antrieb auf, welcher dazu dient, den Deckel des Behälters zu fixieren und weist einen zweiten Antrieb auf, welcher die zweite Fixiervorrichtung zum Greifen und Lösen des Behälterkörpers antreibt. Zusätzlich weist die bekannte Vorrichtung einen dritten Antrieb auf, welcher gesondert von den zuvor genannten beiden Antrieben ausgebildet und in der Vorrichtung vorgesehen ist, um eine Relativverdrehung der ersten und der zweiten Fixiervorrichtung relativ zueinander mit fixierten Schraubverbindungsbauteilen zu bewirken und dadurch schließlich für ein Lösen einer Schraubverbindung zu sorgen.

Eine Greifereinheit für eine automatische Probenöffnungsvorrichtung, welche der in der vorliegenden Anmeldung diskutierten ersten Fixiervorrichtung ähnlich ist, ist überdies aus der DE 299 23 222 U1 bekannt, wobei diese Druckschrift jedoch keinerlei Offenbarung enthält, wie mit der daraus bekannten Vorrichtung über das erste Schraubverbindungsbauteil hinaus das zweite Schraubverbindungsbauteil fixiert werden soll.

Eine weitere Vorrichtung zum automatisierten Öffnen von Behältern mit Schraubverschluss ist aus der EP 0 736 481 A2 bekannt. Diese ist unter Annahme eines gewissen Abstraktionsgrads jener Vorrichtung, wie sie aus der EP 0 972 744 A2 bekannt ist, ähnlich, denn auch sie weist eine erste Fixiervorrichtung zur Fixierung eines Behälterdeckels und weist Klemmbacken zur Fixierung eines Behälterkörpers auf. Im Gegensatz zu den schwenkbeweglichen Klemmbacken der EP 0 972 744 A2 sind die Klemmbacken zur Fixierung des Behälterkörpers gemäß EP 0 736 481 A2 translatorisch beweglich. Auch die aus der EP 0 736 481 A1 bekannte Vorrichtung benötigt wenigstens drei Antriebe zu ihrer vollen Funktionsfähigkeit, nämlich einen ersten Antrieb für die erste Fixiervorrichtung, einen zweiten Antrieb für die zweite Fixiervorrichtung und einen dritten Antrieb zur Einleitung einer Relativbewegung zwischen der ersten und der zweiten Fixiervorrichtung mit daran fixierten Schraubverbindungsbauteilen, also Behälterdeckel und Behälterkörper.

Aufgabe der vorliegenden Erfindung ist, die gattungsgemäße Vorrichtung zu verbessern, insbesondere einen Antrieb einzusparen, ohne gegenüber den aus dem Stand der Technik bekannten Vorrichtungen an Funktionalität einzubüßen.

Diese Aufgabe wird erfindungsgemäß gelöst durch eine Vorrichtung der eingangs genannten Art mit allen Merkmalen des Anspruchs 1.

Um eine zum Öffnen und Schließen von Schraubverschlüssen bzw. zum Lösen und Herstellen einer Schraubverbindung benötigte Reversibilität der Vorrichtung bereitzustellen, ist gemäß der vorliegenden Erfindung vorgesehen, dass die an einer Fixiervorrichtung vorgesehenen Führungs- und Verstellmittel, also insbesondere die Antriebssteuerkurve und die Führungskurve, bezüglich einer die Relativrotationsachse der Schraubverbindungsbauteile enthaltenden Symmetrieebene spiegelsymmetrisch ausgebildet sind. Dies gilt vor allem für die erste Fixiervorrichtung, bei welcher vorteilhafterweise der erste Antrieb nicht nur für die Fixierung und des ersten Schraubverbindungsbauteils, sondern darüber hinaus für eine Relativdrehung zwischen fixiertem ersten Schraubverbindungsbauteil und fixiertem zweiten Schraubverbindungsbaueil sorgt. Wenigstens für jedes Fixierelement sind also in der ersten Fixiervorrichtung die Führungs- und Verstellmittel in der dargelegten Weise spiegelsymmetrisch ausgebildet.

Mit der hier vorgeschlagenen erfindungsgemäßen Ausgestaltung der zweiten Fixiervorrichtung entspricht deren konstruktiver Aufbau im Wesentlichen jenem der ersten Fixiervorrichtung, so dass ein- und dieselbe Bauteilkinematik sowohl zur Fixierung des ersten Schraubverbindungsbauteils sowie auch zur Fixierung des zweiten Schraubverbindungsbauteils nutzbar ist. Somit entspricht das Komplementbauteil der zweiten Fixiervorrichtung dem Ergänzungsbauteil der ersten Fixiervorrichtung und das Festlegeelement der zweiten Fixiervorrichtung entspricht dem Fixierelement der ersten Fixiervorrichtung.

Durch die Verwendung im Wesentlichen gleicher oder strukturell gleicher Bauteilkinematiken in der ersten und in der zweiten Fixiervorrichtung ist sicherlich eine Vereinfachung des Vorrichtungsaufbaus erreicht, da der konstruierende Ingenieur oder/und der montierende Techniker nur eine Maschinenkinematik, jedoch an zwei gesonderten Fixiervorrichtungen, realisieren muss. Dies gilt auch dann, wenn die Bauteile wenigstens einer Bauteilpaarung aus Antriebsteil und Bewegungsteil, Ergänzungsbauteil und Komplementbauteil oder/und Fixierelement und Festlegeelement in den beiden Fixiervorrichtungen unterschiedliche konkrete Ausgestaltungen erfahren, solange nur die oben beschriebene abstrakte Identität erhalten bleibt. So kann also durchaus das Fixierelement der ersten Fixiervorrichtung eine andere Gestalt aufweisen als das Festlegeelement der zweiten Fixiervorrichtung, solange nur beide Elemente zwischen einem relativ zum Vorrichtungsgestell beweglichen Teil und einem gestellfesten Bauteil aufgenommen sind und mittels Führungs- und Verstellmitteln relativ zum Vorrichtungsgestell sowie zu den sie aufnehmenden Teilen durch eine Relativbewegung der sie aufnehmenden Teile in den ihnen zugeordneten Aufnahmebereich hinein und aus diesem heraus verlagerbar sind.

Damit das erste und das zweite Schraubverbindungsbauteil unabhängig voneinander immobilisiert werden können, ist die zweite Fixiervorrichtung mit einem vom ersten Antrieb gesondert ausgebildeten und gesondert betreibbaren zweiten Antrieb versehen, welcher in Antriebswirkverbindung mit dem Bewegungsteil steht, so dass das Bewegungsteil der zweiten Fixiervorrichtung unabhängig vom Antriebsteil der ersten Fixiervorrichtung relativ zum Vorrichtungsgestell und relativ zum Komplementbauteil antreibbar ist.
In der vorliegenden Anmeldung sind die Begriffe "immobilisieren", "fixieren" und "spannen" synonym im Sinne einer Festlegung des betreffenden Bauteils an der jeweiligen Fixiervorrichtung verwendet.

Grundsätzlich könnte die hier diskutierte Vorrichtung beliebige Schraubverbindungen lösen oder herstellen, also etwa auch Schraubverbindungen zwischen Rohrbauteilen, einem Rohrbauteil und einem Deckel und dergleichen. Erfindungsgemäß ist die hier vorgestellte Vorrichtung jedoch zum Lösen oder/und Herstellen einer Schraubverbindung zwischen einem Behälterdeckel und einem Behälterkörper ausgebildet, also zum Öffnen oder/und Schließen von Schraubverschlüssen an Behältern. Dabei ist es grundsätzlich völlig egal, ob das erste Schraubverbindungsbauteil der Behälterdeckel und das zweite Schraubverbindungsbauteil der Behälterkörper ist oder umgekehrt. Beides ist mit der vorliegend diskutierten erfindungsgemäßen Vorrichtung möglich und realisierbar. Bevorzugt ist jedoch in der nachfolgenden Beschreibung im Falle einer Ausbildung der Vorrichtung zum Öffnen oder/und Schließen von Behälterschraubverschlüssen an den Behälterdeckel als das erste Schraubverbindungsbauteil und an den Behälterkörper als das zweite Schraubverbindungsbauteil gedacht.
Die Angleichung von erster und zweiter Fixiervorrichtung auf dem oben dargelegten Abstraktionsniveau ist weiterhin konstruktive Grundlage dafür, dass die Vorrichtung außer dem ersten und dem zweiten Antrieb keine weiteren Antriebe aufzuweisen braucht, um das erste und das zweite Schraubverbindungsbauteil zu immobilisieren, also zu spannen, und die Schraubverbindung zu lösen oder/und herzustellen. Vorzugsweise umfasst also die Vorrichtung nur den ersten und den zweiten Antrieb.

Somit kann einer der beiden genannten Antriebe oder können beide genannten Antriebe nicht nur zur Immobilisierung bzw. zum Fixieren der im Bereich der jeweiligen Fixiervorrichtungen angeordneten Schraubverbindungsbauteilen, sondern darüber hinaus auch zur Erzeugung einer Relativbewegung zwischen den Fixiervorrichtungen mit dort immobilisierten Schraubverbindungsbauteilen eingesetzt werden, was die Anzahl an notwendigen Antrieben für eine funktionstüchtige Vorrichtung gegenüber dem Stand der Technik reduziert.

Eine einfache, aber sichere konstruktive Realisierung einer Bewegung des wenigstens einen Festlegeelements der zweiten Fixiervorrichtung in den zweiten Aufnahmebereich hinein und aus diesem heraus durch Relativbewegung zwischen Bewegungsteil und Komplementbauteil kann dadurch erreicht werden, dass als Führungs- und Verstellmittel der zweiten Fixiervorrichtung in dem Bewegungsteil und in dem Komplementbauteil jeweils wenigstens eine Steuerkurve vorgesehen ist, mit denen eine Führungsausbildung des wenigstens einen Festlegeelements in Anlageeingriff steht. Somit kann durch eine Art Kulissenbahn- oder/und Nockensteuerung eine schnelle und in höchstem Maße zuverlässige Verlagerung des wenigstens einen Festlegeelements in den zweiten Aufnahmebereich hinein und aus diesem heraus gewährleistet werden. Dabei ist zur Verlagerung des wenigstens einen Festlegeelements dann besonders wenig Antriebskraft notwendig, wenn die Führungsausbildung des wenigstens einen Festlegeelements während dessen Verlagerung in Gleitanlageeingriff mit der wenigstens einen Steuerkurve steht.

Im Bestreben, die erste und die zweite Fixiervorrichtung mit möglichst übereinstimmender Kinematik bereitzustellen, kann selbstverständlich auch als Führungs- und Verstellmittel der ersten Fixiervorrichtung in dem Antriebsteil und in dem Ergänzungsbauteil je eine Steuerkurve vorgesehen sein, mit denen eine Führungsausbildung des wenigstens einen Fixierelements in Anlageeingriff, insbesondere während dessen Verlagerung in Gleitanlageeingriff, steht.
Bevorzugt ist das Bewegungsteil zur Ausführung einer Relativrotation relativ zum Komplementbauteil um eine den zweiten Aufnahmebereich durchsetzende Rotationsachse ausgebildet. Durch eine Relativrotation als der Relativbewegung kann in besonders einfachem Maße die von einem Antrieb bereitgestellte Antriebskraft nicht nur zum Immobilisieren bzw. Spannen eines Schraubverbindungsbauteils, sondern auch zur Einleitung einer Relativdrehung zwischen den beiden fixierten Schraubverbindungsbauteilen verwendet werden. Denn es liegt in der Natur einer Schraubverbindung, dass sie nur durch eine Relativdrehung der an ihr beteiligten Schraubverbindungsbauteile gelöst oder hergestellt werden kann. Aus diesem Grunde ist auch die Relativbewegung zwischen Antriebsteil und Ergänzungsbauteil und Vorrichtungsgestell bevorzugt eine Relativrotation. So kann das Bewegungsteil relativ zum Komplementbauteil um eine den zweiten Aufnahmebereich durchsetzende Rotationsachse ausgebildet sein und das Antriebsteil kann zur Ausführung einer Relativrotation relativ zum Ergänzungsbauteil um eine den ersten Aufnahmebereich durchsetzende Rotationsachse ausgebildet sein. Dabei kann eine an einem Bauteil aus dem Bewegungsteil bzw. dem Antriebsteil einerseits und dem Komplementbauteil bzw. dem Ergänzungsbauteil andererseits vorgesehene Steuerkurve als Antriebssteuerkurve eine Komponente in Umfangsrichtung um die Rotationsachse und eine radiale Komponente in Richtung auf die Rotationsachse zu und von dieser weg aufweisen, während an dem jeweils anderen Bauteil eine Steuerkurve als Führungskurve mit einer Komponente in radialer Richtung vorgesehen ist.
Somit kann die Führungskurve, welche vorteilhafterweise nur in radialer Richtung verläuft und keine oder nur eine vernachlässigbare Komponente in Umfangsrichtung aufweisen kann, für die Führung der Verlagerungsbewegung des Festlegeelements oder für eine Führung der Verstellbewegung des wenigstens einen Fixierelements in die zugeordneten Aufnahmebereiche hinein und aus diesen heraus bewirken, während die Antriebskurve die zur Verlagerung des wenigstens einen Festlegeelements bzw. zur Verstellung des wenigstens einen Fixierelements notwendige Antriebskraft bereitstellen kann.
Grundsätzlich können Antriebssteuerkurve und Führungskurve beliebig auf die beiden Bauteile einer Fixiervorrichtung aufgeteilt werden, vorteilhafterweise ist jedoch an der zweiten Fixiervorrichtung die Antriebssteuerkurve am Komplementbauteil und die Führungskurve am Bewegungsteil vorgesehen. Dabei kann es auch und gerade dann, wenn in der ersten Fixiervorrichtung an dem Ergänzungsbauteil, wie unten näher dargelegt, Teile einer drehmomentabhängig wirkenden Kupplung vorgesehen sein sollen, vorteilhaft sein, wenn in der ersten Fixiervorrichtung am Ergänzungsbauteil die weniger Bauraum einnehmende Führungskurve und am Antriebsteil die in der Regel mehr Bauraum beanspruchende Antriebssteuerkurve realisiert ist. So steht am Ergänzungsbauteil ausreichend Bauraum für weitere Gestaltungen, wie beispielsweise die genannte Kupplung, zur Verfügung.
Grundsätzlich kann es ausreichen, wenn die beiden Fixiervorrichtungen die in ihnen vorgesehenen Aufnahmebereiche nur insoweit umgeben, als eine Immobilisierung von in die Aufnahmebereiche eingebrachten Schraubverbindungsbauteilen durch die Fixiervorrichtungen gewährleistet werden kann. Zur Sicherstellung einer möglichst guten Immobilisierung bzw. Aufspannung mit hohen Spannkräften durch das wenigstens eine Fixierelement bzw. das wenigstens eine Festlegeelement ist es jedoch bevorzugt, wenn Antriebsteil und Ergänzungsbauteil bzw. Bewegungsteil und Komplementbauteil die ihnen zugeordneten Aufnahmebereiche vollständig umgeben, also bevorzugt die Aufnahmebereiche als Löcher bzw. Durchgangsöffnungen in Bewegungsteil und Komplementbauteil bzw. Antriebsteil und Ergänzungsbauteil realisiert sind.

Wie oben bereits dargelegt wurde, kann die Führungskurve auf sehr engem Bauraum dadurch realisiert werden, dass sie nur eine Komponente in radialer Richtung und keine Komponente in Umfangsrichtung aufweist. Zusätzlich oder alternativ kann eine ausreichende Umsetzung einer Drehbewegung eines die Antriebssteuerkurve tragenden Bauteils in eine radiale Verstell- bzw. Verlagerungsbewegung des wenigstens einen Fixierelements bzw. des wenigstens einen Festlegeelements dadurch gewährleistet werden, dass die Komponente in Umfangsrichtung der Antriebssteuerkurve in einem zur radialen Verlagerung des wenigstens einen Festlegeelements bzw. in einem zur radialen Verstellung des wenigstens einen Fixierelements beitragenden Aktivabschnitt größer ist als oder gleich groß ist wie die radiale Komponente der Antriebssteuerkurve in diesem Aktivabschnitt.

Grundsätzlich ist es zwar möglich, ein Schraubverbindungsbauteil mit nur genau einem Fixierelement oder mit nur genau einem Festlegeelement in der jeweiligen Fixiervorrichtung zu immobilisieren. Dies kann beispielsweise dadurch geschehen, dass das Festlegeelement oder das Fixierelement das Schraubverbindungsbauteil gegen einen Abschnitt des Vorrichtungsgestells oder gegen einen Abschnitt eines der Bauteile der zugeordneten Fixiervorrichtung drückt und das Schraubverbindungsbauteil zwischen Festlegeelement bzw. Fixierelement und dem jeweiligen Bauteil klemmt.

Bevorzugt weist jedoch eine Fixiervorrichtung eine Mehrzahl von Festlegeelementen bzw. Fixierelementen auf, welche das Schraubverbindungsbauteil vorteilhafterweise zwischen sich immobilisieren. Um eine möglichst symmetrische Einleitung der Spann- bzw. Immobilisierungskraft in das jeweilige Schraubverbindungsbauteil bereitstellen zu können, ist es vorteilhaft, wenn die Mehrzahl von Festlegeelementen bzw. Fixierelementen in der jeweiligen Fixiervorrichtung in Umfangsrichtung um den jeweiligen Aufnahmebereich herum äquidistant, also mit im Wesentlichen gleichen Umfangs- oder/und Winkelabständen zwischen sich angeordnet sind. Dies gilt vor allem für den zur Krafteinleitung wichtigen Zustand, in welchem die Festlegeelemente oder Fixierelemente ein Schraubverbindungsbauteil immobilisieren. Da ein- und dieselbe erfindungsgemäße Vorrichtung in einer bevorzugten Weiterbildung der vorliegenden Erfindung in der Lage sein soll, Schraubverbindungsbauteile mit unterschiedlichen Durchmessern zu immobilisieren, ist es vorteilhaft, wenn die Festlegeelemente oder/und die Fixierelemente unabhängig von ihrer jeweiligen Verlagerungsposition bzw. Verstellposition äquidistant um den jeweiligen Aufnahmebereich herum vorgesehen sind.

Zur Verminderung des Risikos eines Durchrutschens eines Schraubverbindungsbauteils in einer Fixiervorrichtung im immobilisierten Zustand, also zur Verminderung des Risikos einer unzureichenden Immobilisierung, kann vorgesehen sein, dass das wenigstens eine Festlegungselement eine Rolle umfasst, vorzugsweise eine Rolle mit einer Mantelfläche, deren Reibkoeffizient durch Erhöhung der Oberflächenrauigkeit oder/und durch Beschichtung mit einem vom Rollengrundkörper verschiedenen Beschichtungsmaterial, verglichen mit einer unbehandelten Mantelfläche, erhöht ist. Weiterhin können an einer solchen Rolle in Richtung der Rollenachse axial abstehende Achs- oder Wellenstümpfe vorgesehen sein, welche die mit den Führungs- und Verstellmitteln zusammenwirkenden Führungsausbildungen aufweisen oder sogar sind. Dann, wenn die Rolle um die abstehenden Achs- oder Wellenstümpfe drehbar in der jeweiligen Fixiervorrichtung vorgesehen ist, kann ein sanftes Anlegen des rollenförmigen Festlegungselements an das Schraubverbindungsbauteil sichergestellt werden, was die Oberfläche des zu immobilisierenden Schraubverbindungsbauteils schont.

Besonders sicher kann das Festlegungselement gelagert und geführt sein, wenn von der Rolle ausgehend zu beiden entgegengesetzten Seiten je ein Achs- oder Wellenstumpf absteht, von denen einer mit der am Bewegungsteil vorgesehenen Steuerkurve und der jeweils andere mit der am Komplementbauteil vorgesehenen Steuerkurve als Führungsausbildung zusammenwirkt.

Zur Ausübung möglichst großer Immobilisierungskräfte kann bei rollenförmiger Ausbildung des Festlegungselements eine Umfangswand vorgesehen sein, an der das rollenförmige Festlegeelement bei seiner Verlagerung in den zweiten Aufnahmebereich hinein und aus diesem heraus abrollen kann. Vorzugsweise ist die Umfangswand an dem die Antriebssteuerkurve tragenden Bauteil ausgebildet, also im Falle der zweiten Fixiervorrichtung bevorzugt am Komplementbauteil.

Das in den obigen Weiterbildungen zum Festlegungselement Gesagte gilt entsprechend auch für das wenigstens eine Fixierelement. Auch hier kann bei rollenförmiger Ausbildung des wenigstens einen Fixierelements eine Umfangswand vorgesehen sein, die eine Abrollbahn für dieses während seiner Verstellung bereitstellt. Die Umfangswand ist in der ersten Fixiervorrichtung bevorzugt an dem Antriebsteil vorgesehen, welches bevorzugt die Antriebssteuerkurve aufweist.

Ein möglichst stabiles und damit ein zur Übertragung einer möglichst großen Immobilisierungskraft ausgebildetes Bewegungsteil mit gleichzeitig geringem Bauraumbedarf kann dadurch erhalten werden, dass das Bewegungsteil eine sich um eine Scheibenachse erstreckende Scheibe umfasst oder sogar bevorzugt eine solche Scheibe ist, in deren die Scheibenachse enthaltendem Zentralbereich eine zum zweiten Aufnahmebereich beitragende Ausnehmung vorgesehen ist. Dann kann die in Richtung der Scheibenachse weisende Stirnfläche die Steuerkurve des Bewegungsteils aufweisen. Dies bedeutet, dass die Scheibe dann eine ausreichende axiale Dicke zur Ausbildung der Steuerkurve aufweisen muss. Weiter kann die radial äußere Mantelfläche der Scheibe eine Eingriffsausbildung zum Kraft und Bewegung übertragenden Eingriff mit dem zweiten Antrieb aufweisen. Dies kann eine Eingriffsausbildung für einen Reibschlusseingriff sein, wobei jedoch eine Formschlusseingriffsausbildung bevorzugt ist, da diese eine Übertragung höherer Kräfte gestattet als ein bloßer Reibschluss. Beispielsweise kann an der radial äußeren Mantelfläche der Scheibe eine Verzahnung vorgesehen sein. Um ein Taumeln des durch die zweite Fixiervorrichtung immobilisierten zweiten Schraubverbindungsbauteils zu vermeiden, kann vorgesehen sein, die Scheibenachse derart auszurichten, dass sie mit einer den zweiten Aufnahmebereich zentral durchsetzenden Aufnahmeachse zusammenfällt. Besonders bevorzugt fällt die Scheibenachse und fällt auch die genannte Aufnahmeachse mit der Rotationsachse des Bewegungsteils zusammen. Entsprechendes gilt mutatis mutandis für das Antriebsteil der ersten Fixiervorrichtung.

Die zuvor genannte Abrollbahn kann am Bewegungsteil der Eingriffsausbildung radial entgegengesetzt vorgesehen sein, beispielsweise an einer Umfangswand, welche an ihrer nach radial außen weisenden Seite die Eingriffsausbildung und an ihrer nach radial innen weisenden Seite die Abrollbahn aufweisen kann.

Um zu verhindern, dass ein Festlegungselement oder ein Fixierelement seinen gesicherten Bewegungsraum verlässt oder sonstwie durch Erreichen eines Bewegungsraumendbereichs ein kritischer Betriebszustand der vorliegend diskutierten Vorrichtung erreicht wird, kann vorgesehen sein, dass ein mechanischer Anschlag vorgesehen ist, welcher unabhängig davon, ob im zugeordneten Aufnahmebereich einer Fixiervorrichtung ein Schraubverbindungsbauteil vorhanden ist oder nicht, eine Relativbewegung des Bewegungsteils relativ zum Komplementbauteil bzw. eine Relativbewegung des Antriebsteils relativ zum Ergänzungsbauteil begrenzt. Diese Begrenzung wirkt vorzugsweise in beiden möglichen Relativdrehrichtungen, da mit der vorliegend diskutierten Vorrichtung eine Schraubverbindung nicht nur gelöst, sondern alternativ oder zusätzlich hergestellt werden kann.

Der erste oder/und der zweite Antrieb sind vorzugsweise am Vorrichtungsgestell festgelegt, da dieses ausreichend stabil ausgebildet werden kann, um die durch den jeweiligen Antrieb ausgelösten Lagerkräfte und -momente aufzunehmen. Es soll jedoch nicht ausgeschlossen sein, dass ein oder beide Antriebe an einer anderen Stelle als unmittelbar am Vorrichtungsgestell aufgenommen sind.

Wie eingangs ausgesagt wurde, ist das Ergänzungsbauteil wenigstens bis zur Herstellung eines Fixiereingriffs zwischen der ersten Fixiervorrichtung und dem ersten Schraubverbindungsbauteil gestellfest, bewegt sich also bis zu diesem Zeitpunkt relativ zum Vorrichtungsgestell nicht.

Grundsätzlich könnte das Ergänzungsbauteil auch nach Herstellung eines Fixiereingriffs zwischen der ersten Fixiervorrichtung und dem ersten Schraubverbindungsbauteil gestellfest verbleiben. Dann kann jedoch eine zum Lösen oder/und Herstellen einer Schraubverbindung zwischen dem ersten und dem zweiten Schraubverbindungsbauteil notwendige Relativdrehbewegung zwischen den Schraubverbindungsbauteilen nicht durch den ersten Antrieb bewirkt werden.
Letzteres ist jedoch vorteilhafterweise dann möglich, wenn das Ergänzungsbauteil nach Herstellung eines Fixiereingriffs zwischen der ersten Fixiervorrichtung und dem ersten Schraubverbindungsbauteil relativ zum Vorrichtungsgestell beweglich, insbesondere relativ verdrehbar ist. Dies ist konstruktiv erfindungsgemäß dadurch realisiert, dass das Ergänzungsbauteil der ersten Fixiervorrichtung relativ zum Vorrichtungsgestell beweglich gelagert ist und zwischen Ergänzungsbauteil und Vorrichtungsgestell eine drehmomentabhängig wirkende Kupplung, wie etwa mechanische Rutschkupplung, Reibungskupplung oder magnetische Kupplung, insbesondere Hysteresekupplung, derart vorgesehen ist, dass sie das Ergänzungsbauteil dann, wenn auf das Ergänzungsbauteil relativ zum Vorrichtungsgestell ein Drehmoment einwirkt, das kleiner als ein vorbestimmtes Grenzmoment ist, als im Wesentlichen gestellfestes Bauteil mit dem Vorrichtungsgestell koppelt und dass sie dann, wenn auf das Ergänzungsbauteil relativ zum Vorrichtungsgestell ein Drehmoment einwirkt, das größer als oder gleich groß ist wie ein vorbestimmtes Grenzmoment ist, eine Relativbewegung zwischen Ergänzungsbauteil und Vorrichtungsgestell gestattet. In diesem Falle kann bei Bereitstellung eines ausreichend starken ersten Antriebs durch Betrieb desselben zunächst das erste Schraubverbindungsbauteil mit der ersten Fixiervorrichtung fixiert werden und dann mit dem selben Antrieb nach Herstellung des Fixiereingriffs, also nach Immobilisierung des ersten Schraubverbindungsbauteils relativ zur ersten Fixiervorrichtung, durch Überschreiten des Grenzmoments die Bauteile: Ergänzungsbauteil und Antriebsteil, gemeinsam relativ zum Vorrichtungsgestell bewegen, insbesondere drehen, wobei dabei zwangsweise das von der ersten Fixiervorrichtung immobilisierte Schraubverbindungsbauteil mitbewegt wird. Der Kraft- bzw. Drehmomentenfluss verläuft bei hergestelltem Fixiereingriff vorzugsweise vom ersten Antrieb über das Antriebsteil und das immobilisierte wenigstens eine Fixierelement auf das Ergänzungsbauteil.
Aufgrund ihrer Eigenschaften ist eine Hysteresekupplung als drehmomentabhängig wirkende Kupplung bevorzugt. Deren Grenzmoment lässt sich durch Magnetpolzahl, Luftspaltabmessung zwischen Magneten und Hysteresewerkstoff leicht festlegen und ist dann von der Relativdrehgeschwindigkeit zwischen den durch die Hysteresekupplung gekoppelten Bauteilen im Wesentlichen unabhängig und konstant.
Deshalb ist gemäß einer vorteilhaften Weiterbildung der vorliegenden Erfindung bevorzugt, wenn die drehmomentabhängig wirkende Kupplung eine Hysteresekupplung ist, mit einer Mehrzahl von Magneten, welche an einem Abschnitt aus einem Kupplungsabschnitt des Vorrichtungsgestells und einem diesem über einen Luftspalt hinweg gegenüberliegenden Gegenkupplungsabschnitt des Ergänzungsbauteils längs eines Relativbewegungswegs zwischen Vorrichtungsgestell und Ergänzungsbauteil aufeinander folgend vorgesehen sind, und mit einem Hysteresebauteil, welches, einen unmagnetisierten dauermagnetisierbaren Werkstoff umfassend, über den Luftspalt hinweg am jeweils anderen Abschnitt aus Kupplungsabschnitt und Gegenkupplungsabschnitt den Magneten gegenüberliegend vorgesehen ist.

Da bereits mit sehr geringen Luftspalten Hysteresekupplungen funktionsfähig gebildet werden können, kann mit einer Hysteresekupplung eine axial wenig Bauraum beanspruchende erste Fixiervorrichtung realisiert werden.

Das Ziel, die erste Fixiervorrichtung in einem axial besonders geringen Bauraum realisieren zu können, kann weiter dadurch unterstützt werden, dass das Ergänzungsbauteil eine sich um eine Scheibenachse erstreckende Scheibe umfasst, vorzugsweise eine solche Scheibe ist, in deren die Scheibenachse enthaltendem Zentralbereich eine zum ersten Aufnahmebereich beitragende Ausnehmung vorgesehen ist.

Zusätzlich oder alternativ kann die vom Ergänzungsbauteil umfasste Scheibe in einer Stirnfläche - wobei die Stirnfläche in Richtung der Scheibenachse weist - eine Steuerkurve der Führungs- und Verstellmittel der ersten Fixiervorrichtung aufweisen. Zur Bereitstellung einer möglichst taumelfreien Drehbewegung des an der ersten Fixiervorrichtung immobilisierten Schraubverbindungsbauteils ist es bevorzugt, wenn die Scheibenachse des Ergänzungsbauteils mit einer den ersten Aufnahmebereich zentral durchsetzenden Aufnahmeachse und noch stärker bevorzugt mit einer Relativrotationsachse des Ergänzungsbauteils zusammenfällt. Die Relativrotationsachse ist dabei jene Rotationsachse, um welche das Ergänzungsbauteil nach Herstellung des Fixiereingriffs relativ zum Vorrichtungsgestell drehbar ist.

Besonders bevorzugt weist das Ergänzungsbauteil auf seiner einen Stirnseite den Gegenkupplungsabschnitt der Hysteresekupplung auf und weist auf seiner entgegengesetzten Stirnseite die Steuerkurve auf.

Zur Erleichterung der Einführung des ersten Schraubverbindungsbauteils in die zum ersten Aufnahmebereich beitragende Ausnehmung des Ergänzungsbauteils kann das Ergänzungsbauteil an seinem der zentralen Ausnehmung zugewandten Rand eine Einführschräge aufweisen. Dann, wenn das erste Schraubverbindungsbauteil in einem mit dem zweiten Schraubverbindungsbauteil verschraubten Zustand in die Vorrichtung eingeführt werden soll, erleichtert eine derartige Einführschräge auch die Einführung des zweiten Schraubverbindungsbauteils in die hier diskutierte Vorrichtung.

An einem Längsende der Vorrichtung bezogen auf eine Relativrotationsachse der beiden Schraubverbindungsbauteile kann die Vorrichtung eine Spanneinrichtung aufweisen, welche dafür sorgt, dass ein Schraubverbindungsbauteil oder beide Schraubverbindungsbauteile auch dann sicher in der Vorrichtung verbleiben, wenn keine der Fixiervorrichtungen die bereits in die Vorrichtung eingeführten Schraubverbindungsbauteile immobilisiert. Dadurch kann das Erfordernis entfallen, die Schraubverbindungsbauteile oder eines davon so lange mit einem Handhabungsgerät zu halten, bis das oder die Schraubverbindungsbauteile von einer Fixiervorrichtung der Vorrichtung immobilisiert wurden.

Die Spanneinrichtung kann beispielsweise reibschlüssig wirken und kann in einem einfachen Fall durch Schraub- oder Biegefedern realisiert sein, welche in radialer Richtung bezogen auf die Relativrotationsachse der Schraubverbindungsbauteile federnd an der Vorrichtung gelagert sind.

Vorzugsweise weist die Spannvorrichtung mehrere Biegefedern gleicher Bauart auf, welche äquidistant um die Relativrotationsachse der Schraubverbindungsvorrichtungen an der Vorrichtung angeordnet sind. Dadurch kann nicht nur ein Herausfallen der Schraubverbindungsbauteile aus der Vorrichtung verhindert werden, sondern diese können bezüglich der Spannvorrichtung sogar zentriert werden. Deshalb ist es bevorzugt, wenn die durch die vorteilhaft weitergebildete Spannvorrichtung definierte Zentrierachse mit den Relativrotationsachsen der einzelnen Fixiervorrichtungen und den Ausnehmungsachsen derselben zusammenfällt.

Somit wird insbesondere dann eine leichtgängige und mit geringem Antriebsaufwand betreibbare Vorrichtung erhalten, wenn das Ergänzungsbauteil oder/und das Antriebsteil oder/und das Bewegungsteil um parallele, vorzugsweise um koaxiale, Relativrotationsachsen relativ zum Vorrichtungsgestell drehbar vorgesehen sind. Konstruktiv kann die Vorrichtung derart ausgebildet sein, dass der erste oder/und der zweite Aufnahmebereich eine Aufnahmeachse definieren, bezüglich welcher in axialer Richtung der Kupplungsabschnitt, das Ergänzungsbauteil, das Antriebsteil, das Komplementbauteil und das Bewegungsteil in dieser Reihenfolge von einem Einführende der Vorrichtung aus vorgesehen sind, wobei vorzugsweise die Aufnahmeachsen des ersten und des zweiten Aufnahmebereichs koaxial sind.

Mit der genannten Anordnungsreihenfolge kann besonders vorteilhaft eine Vorrichtung zum Öffnen oder/und Schließen von Schraubverschlüssen bereitgestellt werden.

Weiter kann an der Vorrichtung Sensorik vorgesehen sein, um vorbestimmte Relativbewegungs- oder Stellungszustände zwischen Vorrichtungsbauteilen zu erfassen.

Beispielsweise kann eine Sensoreinrichtung vorgesehen sein, um eine vorbestimmte Relativstellung des Ergänzungsbauteils relativ zum Vorrichtungsgestell zu ermitteln. Dabei reicht es aus, wenn diese Sensorvorrichtung einen Signalwechsel ausführt, wenn die vorbestimmte Relativstellung zwischen Ergänzungsbauteil und Vorrichtungsgestell vorliegt, im Vergleich zu dann, wenn sie nicht vorliegt.

Weiter kann eine Sensoreinrichtung vorgesehen sein, um zu bestimmen, ob wenigstens ein Schraubverbindungsbauteil in die Vorrichtung eingeführt ist oder nicht.

Ebenso kann eine Sensoreinrichtung vorgesehen sein, um eine vorbestimmte Relativstellung des Antriebsteils relativ zum Vorrichtungsgestell, insbesondere relativ zum Komplementbauteil der zweiten Fixiervorrichtung zu erfassen. Dadurch kann festgestellt werden, ob die erste Fixiervorrichtung bereit ist zur Aufnahme eines Schraubverbindungsbauteils.

Entsprechendes gilt für die Erfassung einer vorbestimmten Relativstellung zwischen Bewegungsteil der zweiten Fixiervorrichtung und dem Vorrichtungsgestell. Auch zwischen diesen Bauteilen kann eine Sensoreinrichtung vorgesehen sein. Beispielsweise können als Sensoren Hall-Sensoren, aber auch andere Sensoren, wie kapazitive Sensoren, Induktionsschalter und dergleichen verwendet werden.

Die vorliegende Erfindung wird nachfolgend anhand der beiliegenden Zeichnungen näher erläutert. Es stellt dar:
- Fig. 1: eine perspektivische Darstellung einer erfindungsgemäßen Ausführungsform der vorliegenden Erfindung,
- Fig. 2: eine Längsschnittansicht durch eine die zentrale Ausnehmungsachse A und eine zu dieser parallele Schraubenachse S von Fig. 1 enthaltende Schnittebene,
- Fig. 3a: eine Ansicht auf das Komplementbauteil der zweiten Fixiervorrichtung der Vorrichtung gemäß der Pfeile IIIa-IIIa in Fig. 2, unter Weglassung des Bewegungsteils sowie von Montagebauteilen der Vorrichtung, mit in die zweite Fixiervorrichtung eingebrachten, aber noch nicht mobilisiertem Behälterkörper,
- Fig. 3b: eine Draufsicht auf das Antriebsteil der ersten Fixiervorrichtung gemäß der Ebene IIIb-IIIb von Fig. 2 unter Weglassung des Ergänzungsbauteils und eines Kupplungsabschnitts des Vorrichtungsgestells, mit in die erste Fixiervorrichtung eingesetztem, aber noch nicht immobilisiertem Behälterdeckel,
- Fig. 4a: die Ansicht von Fig. 3a mit immobilisiertem Behälterkörper,
- Fig. 4b: die Ansicht von Fig. 3b zum Zeitpunkt des Zustands der zweiten Fixiervorrichtung gemäß Fig. 4a,
- Fig. 5a: die Ansicht von Fig. 4a zum Zeitpunkt des Zustands der ersten Fixiervorrichtung gemäß Fig. 5b,
- Fig. 5b: die Ansicht von Fig. 4b mit immobilisiertem Behälterdeckel,
- Fig. 6a: die Ansicht von Fig. 5a zum Zeitpunkt des Zustands der ersten Fixiervorrichtung gemäß Fig. 6b, und
- Fig. 6b: die Ansicht von Fig. 5b mit immobilisiertem und bezüglich des in der zweiten Fixiervorrichtung immobilisiertem Behälterkörpers verdrehtem Behälterdeckel.

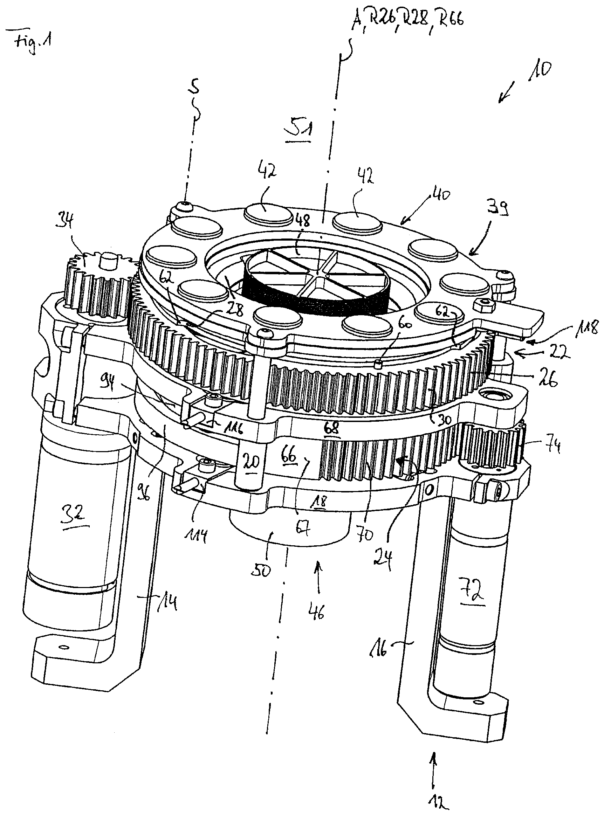

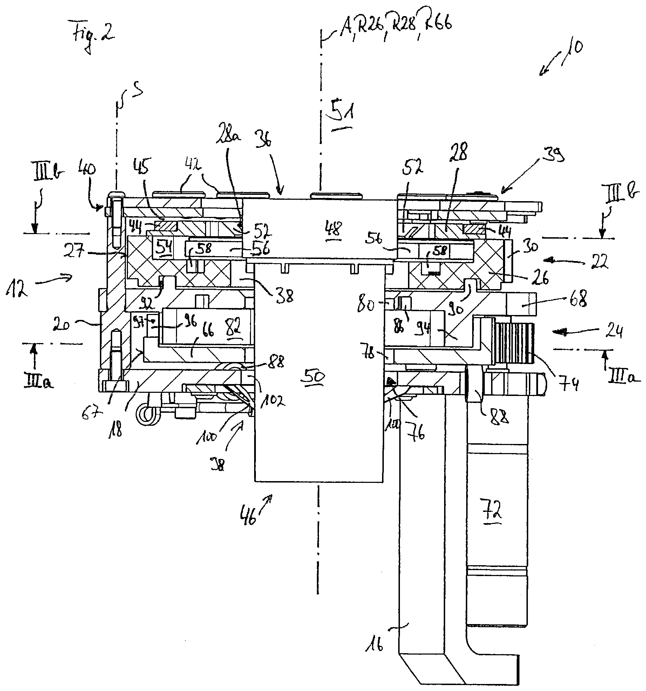

In den Fig. 1 und 2, auf die nachfolgend gemeinsam Bezug genommen wird, ist eine erfindungsgemäße Vorrichtung allgemein mit 10 bezeichnet. Die Vorrichtung umfasst ein Vorrichtungsgestell 12, zu welchem beispielsweise Standbeine 14 und 16, eine Bodenscheibe 18 und Montageschäfte 20 gehören können.

Grundsätzlich kann jedes vorrichtungsgestellfeste Bauteil als zu dem Vorrichtungsgestell 12 gehörend angesehen werden, wenngleich ein solches Bauteil im Rahmen der vorliegenden Erfindung über seine Gestelleigenschaft hinaus weitere Funktionseigenschaften in der Vorrichtung 10 aufweisen kann.

Die Vorrichtung 10 weist eine erste Fixiereinrichtung 22 und eine zweite Fixiereinrichtung 24 auf, wobei die zweite Fixiereinrichtung 24 der ersten Fixiereinrichtung 22 vorzugsweise benachbart ist, und zwar besonders bevorzugt axial benachbart bezogen auf eine weiter unten erläuterte Aufnahmeachse A.

Die erste Fixiervorrichtung weist ein Antriebsteil 26 und ein Ergänzungsbauteil 28 auf.

Das Antriebsteil 26 kann als Scheibe ausgebildet sein, die an ihrer nach radial außen gewandten Mantelfläche 27 eine Formschlussausbildung 30 aufweisen kann, um mit einem ersten Antrieb 32, welcher vorzugsweise am Vorrichtungsgestell 22 gestellfest aufgenommen sein kann, zur Übertragung von Antriebskraft in Formschlusseingriff stehen zu können. Durch den Formschlusseingriff, etwa mit einem Antriebsritzel 34, kann ein hohes Antriebsdrehmoment bzw. eine hohe Antriebskraft auf das Antriebsteil 26 übertragen, vorzugsweise unmittelbar übertragen werden.

Die erste Fixiervorrichtung 22 weist einen ersten Aufnahmebereich 36 in Form einer Durchgangsöffnung durch die erste Fixiervorrichtung 22 auf, wobei die Durchgangsöffnung vorzugsweise kreisrund oder wenigstens näherungsweise kreisrund mit einer sie zentral durchsetzenden Ausnehmungsachse A ist. Die Ausnehmungsachse A fällt dabei vorteilhafterweise mit einer Rotationsachse R26 des Antriebsteils 26 zusammen, um welche das Antriebsteil 26 als bevorzugte Relativbewegungsform relativ zum Vorrichtungsgestell 12 drehbar ist.

Das vorzugsweise scheibenförmig ausgestaltete Antriebsteil 26 weist beispielsweise eine bevorzugt zentral von der Ausnehmungsachse A durchsetzte Durchgangsöffnung 38 auf, welche zur Bildung des ersten Aufnahmebereichs 36 beiträgt.

Das Ergänzungsbauteil 28 ist über eine drehmomentabhängige Kupplung 39 derart mit einem axial benachbarten, vorrichtungsgestellfesten Kupplungsabschnitt 40 gekoppelt, das das Ergänzungsbauteil 28 bis zum Erreichen eines auf es wirkenden Grenzdrehmoments durch die drehmomentabhängige Kupplung vorrichtungsgestellfest gehalten ist und nach Überschreiten des Grenzdrehmoments die Kupplungswirkung bricht und das Ergänzungsbauteil 28 relativ zum Vorrichtungsgestell 12 beweglich ist, und zwar bevorzugt um eine Rotationsachse R28 drehbar ist, welche mit der Rotationsachse R26 des Antriebsteils 26 vorteilhafterweise zusammenfällt.
Die drehmomentabhängige Kupplung 39 zwischen dem Kupplungsabschnitt 40 und dem Ergänzungsbauteil 28 kann in verschiedener Gestalt realisiert sein, beispielsweise als Reib- oder Rutschkupplung und dergleichen, ist jedoch aufgrund der ihr innewohnenden Eigenschaften bevorzugt als magnetische Hysteresekupplung 39 ausgestaltet. Zu diesem Zweck kann der Kupplungsabschnitt 40 eine Mehrzahl von Permanentmagneten 42 aufweisen, welche vorteilhafterweise längs des Relativbewegungswegs des Ergänzungsbauteils 28 relativ zum Vorrichtungsgestell 12 mit gleichen Abständen voneinander vorgesehen sein können.
Am Ergänzungsbauteil 28 kann zur Wechselwirkung mit den Magneten 42 des Kupplungsabschnitts 40 ein Hystereseteil 44 vorgesehen sein, welches aus unmagnetisiertem, aber dauermagnetisierbarem Werkstoff gebildet ist und über einen Luftspalt 45 länglicher, aber kleiner Größe dem mit dem Magneten 42 bestückten Kupplungsabschnitt 40 gegenüberliegt. Zu den vorteilhaften Eigenschaften einer Hysteresekupplung wird auf die Ausführung in der Beschreibungseinleitung verwiesen.
Üblicherweise werden Schraubverbindungsbauteile, hier: beispielhaft ein Behälter 46 mit einem Behälterdeckel 48 als einem ersten Schraubverbindungsbauteil und einem Behälterkörper 50 als einem zweiten Schraubverbindungsbauteil, von der Seite des Kupplungsabschnitts 40 als einer Einführseite 51 aus in den ersten Aufnahmebereich 36 hinein und durch diesen hindurch eingeführt. Zur Erleichterung dieses Einführens kann ein radial innerer Rand einer zum ersten Aufnahmebereich 36 beitragenden zentralen Ausnehmung 28a des Ergänzungsbauteils 28 eine Einführschräge oder mehrere Abschnitte mit Einführschrägen 52 aufweisen.

Das Antriebsteil 26 und das Ergänzungsbauteil 28 fassen bevorzugt zwischen sich einen Raum 54 ein, in welchem wenigstens ein Fixierelement 56, besonders bevorzugt eine Mehrzahl von Fixierelementen 56, im dargestellten Beispiel genau drei Fixierelemente 56 aufgenommen sind.

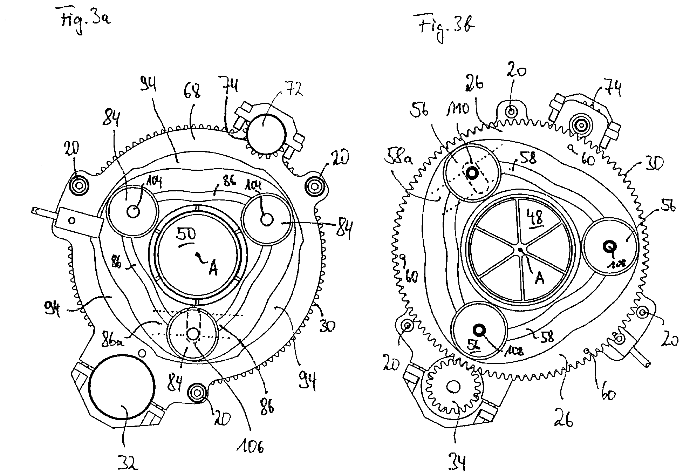

Das wenigstens eine Fixierelement 56 ist durch Relativbewegung zwischen dem Antriebsteil 26 und dem bis zum Erreichen eines auf es wirkenden Grenzdrehmoments vorrichtungsgestellfesten Ergänzungsbauteil 28 in seiner Lage relativ zum ersten Aufnahmebereich 36 verstellbar. Dies wird näher im Zusammenhang mit den weiter unten erläuterten Figuren 3b bis 6b erläutert werden.

Zum Zwecke der Verstellung des wenigstens einen Fixierelements 56 sind in der ersten Fixiervorrichtung 22 Führungs- und Verstellmittel vorgesehen. Genauer kann hierzu, vorteilhaft etwa in der zum Ergänzungsbauteil 28 hinweisenden Stirnseite des bevorzugt scheibenförmigen Antriebsteils 26, eine Antriebssteuerkurve 58 ausgebildet sein und kann in der zum Antriebsteil 26 weisenden Stirnseite des Ergänzungsbauteils 28 eine in den Figuren nicht dargestellte Führungskurve vorgesehen sein.

Mit diesen Führungs- und Verstellmitteln kann eine Führungsausbildung des wenigstens einen Fixierelements 56 mechanisch zusammenwirken, etwa durch Gleitanlageeingriff, so dass eine schnelle und im höchsten Maße zuverlässige mechanische Zwangssteuerung realisiert werden kann. Im vorliegenden Beispiel ist bevorzugt die Führungsausbildung des wenigstens einen Fixierelements 56 zweiteilig ausgestaltet, und zwar durch je einen Wellenstumpf- bzw. Achsfortsatz, welcher zu jeder Seite des Fixierelements 56 von diesem absteht und sowohl in die nutartig vorgesehene Antriebssteuerkurve 58 als auch in die ebenfalls nutartig vorgesehene Führungskurve im Ergänzungsbauteil 28 hineinragt.

Während der Verlauf der nutartig ausgestalteten Antriebssteuerkurve 58 in den Fig. 3b bis 6b zu erkennen ist, ist in dem Ergänzungsbauteil 28 für jedes Fixierelement 56 eine gesonderte Nut als Führungskurve vorgesehen, welche ausschließlich in radiale Richtung bezogen auf die Aufnahmeachse A verlaufen kann. Somit kann die Antriebssteuerkurve 58 die zur Verstellung des wenigstens einen Fixierelements 56 notwendige Antriebskraft auf dieses übertragen, während die vorzugsweise ausschließlich radiale Führungskurve den Bewegungsverlauf des wenigstens einen Fixierelements 56 vorgibt. Dabei sind auch andere Verläufe der Führungskurve als ausschließlich radiale denkbar. Bei der gegebenen Ausgestaltung des wenigstens einen Fixierelements 56 wird sich dieses stets an einem - bei Betrachtung einer axialen Projektion der Antriebssteuerkurve 58 und der Führungskurve - Schnittpunkt der Antriebssteuerkurve 58 und der Führungskurve befinden. Damit das wenigstens eine Fixierelement 56 sich um seine Führungsausbildung drehen kann und somit eine sanfte Anlage an das erste Schraubverbindungsbauteil 48 möglich ist, sind die zu beiden Seiten des Führungselements 56 abstehenden Führungsausbildungen vorzugsweise rotationssymmetrisch, etwa zylindrisch oder kegelstumpfförmig, oder kegelförmig mit koaxialen Rotationssymmetrieachsen, etwa Zylinder- oder Kegelachsen, ausgestaltet.

Die Aufteilung von Antriebssteuerkurve 58 und Führungskurve auf das Antriebsteil 26 und das Ergänzungsbauteil 28 muss nicht wie in dem vorliegenden Beispiel dargestellt erfolgen. So kann die Antriebssteuerkurve 58 in der entsprechenden Stirnseite des Ergänzungsbauteils 28 und stattdessen die Führungskurve in der entsprechenden Stirnseite des Antriebsteils 26 ausgebildet sein.

Wie in Fig. 1 zu erkennen ist, weisen das Antriebsteil 26 und das Ergänzungsbauteil 28 Anschlag- und Anschlaggegenmittel auf, um einen Relativbewegungsbereich zwischen den genannten Bauteilen 26 und 28 zu definieren. Hierzu kann beispielsweise an dem Antriebsteil 26 ein axialer Anschlagvorsprung 60 ausgebildet sein, welcher mit radialen Anschlagvorsprüngen 62 des Ergänzungsbauteils 28 zusammenwirkt. Durch diese Anschlag- und Gegenanschlagmittel 60 bzw. 62 wird mittelbar über Begrenzung der Relativbewegung zwischen dem Antriebsteil 26 und dem Ergänzungsbauteil 28 auch der Verstellweg des zwischen diesen Bauteilen angeordneten wenigstens einen Fixierelements 56 begrenzt.

Die zweite Fixiervorrichtung 24 weist einen ähnlichen konstruktiven Aufbau mit einer ähnlichen kinematischen Wirkung wie die erste Fixiervorrichtung 22 auf.

Die zweite Fixiervorrichtung 24 weist ein vorzugsweise ebenfalls scheibenartig ausgebildetes Bewegungsteil 66 und ein im Gegensatz zum Ergänzungsbauteil 28 vorzugsweise dauerhaft vorrichtungsgestellfestes Komplementbauteil 28 auf.

Das vorzugsweise scheibenartig ausgestaltete Bewegungsteil 66 kann auf seiner radial nach außen weisenden Mantelfläche 67 eine Formschlusseingriffsgeometrie 70 aufweisen, etwa eine Verzahnung 70, welche mit einem gesondert vom ersten Antrieb 32 ausgebildeten zweiten Antrieb 72, etwa mit dessen Antriebsritzel 74 zur Übertragung von Antriebskraft im Formschlusseingriff stehen kann.

Der erste Antrieb 32 und der zweite Antrieb 72 sind unabhängig voneinander betreibbar.

Zur Festlegung des Komplementbauteils 68 am Vorrichtungsgestell 12 kann dieses beispielsweise von Abschnitten der Montageschäfte 20 durchsetzt sein, welche vorzugsweise längs der zur Aufnahmeachse A parallelen Achse S verlaufen.

Wie die erste Fixiervorrichtung 22 weist auch die zweite Fixiervorrichtung 24 einen zweiten Aufnahmebereich 76 auf. Zu diesem zweiten Aufnahmebereich 76, welcher zur Aufnahme des zweiten Schraubverbindungsbauteils, im vorliegenden Beispiel in Form des Behälterkörpers 50, gedacht ist, trägt beispielsweise eine Durchgangsöffnung 78 des Bewegungsteils 66 und ebenso eine Durchgangsöffnung 80 des Komplementbauteils 68 bei. Beide Durchgangsöffnungen 78 und 80 sind vorzugsweise kreisrund und zentrisch bezüglich der Aufnahmeachse A ausgerichtet, so dass die Aufnahmeachse A besonders bevorzugt eine zentrische Achse bezüglich des ersten und des zweiten Aufnahmebereichs 36 bzw. 76 sowie vorzugsweise aller Durchgangsöffnungen 28a, 38, 76, 80 und der nicht mit Bezugszeichen versehenen Durchgangsöffnung und des Kupplungsabschnitts 40 ist.

Vorzugsweise ist das Bewegungsteil 66 relativ zum Vorrichtungsgestell 12 durch den zweiten Antrieb 72 zur Bewegung antreibbar, genauer bevorzugt zu einer Rotationsbewegung, um eine Rotationsachse R66, welche wiederum bevorzugt mit der Rotationsdrehachse R26 des Antriebsteils 26 koaxial ist.

Vorzugsweise fassen auch das Bewegungsteil 66 und das Komplementbauteil 68 einen Raum 82 ein, in welchem wenigstens ein Festlegeelement 84, vorzugsweise eine Mehrzahl von Festlegeelementen 84, im vorliegenden Beispiel genau drei Festlegeelemente 84 angeordnet sind, die in den Fig. 3a bis 6a, nicht jedoch in den Fig. 1 und 2 dargestellt sind.

Das wenigstens eine Festlegeelement 84 (siehe Fig. 3a bis 6a) ist besonders bevorzugt identisch mit dem wenigstens einen Fixierelement 56 ausgebildet, so dass die oben für das wenigstens eine Fixierelement 56 gegebene Beschreibung mutatis mutandis auf das wenigstens eine Festlegeelement 84 anwendbar ist. Auch das wenigstens eine Festlegeelement 84 ist bevorzugt in Rollenform ausgebildet mit besonders bevorzugt koaxialen zu beiden Seiten abstehenden rotationssymmetrischen Führungsausbildungen. Diese können die Form von Wellen- oder Achsstümpfen aufweisen, die in entsprechenden Führungs- und Verstellmitteln der zweiten Fixiervorrichtung 24 geführt sind.

Bei der zweiten Fixiervorrichtung 24 kann beispielsweise eine in den Fig. 3a bis 6a erkennbare nutförmige Antriebssteuerkurve 86 und kann eine Führungskurve, insbesondere eine ausschließlich radial verlaufende Führungskurve in dem Bewegungsteil 66 ausgebildet sein. Genauer kann für jedes Festlegeelement 84 ein von weiteren Abschnitten gesonderter Führungskurvenabschnitt in der zum Komplementbauteil 68 hin weisenden Stirnseite des Bewegungsteils 66 ausgebildet sein und kann die Antriebssteuerkurve 86 in der zum Bewegungsteil 66 hin weisenden Stirnseite des Komplementbauteils 68 ausgebildet sein. Die Zuordnung muss jedoch nicht wie oben beschrieben erfolgen, sondern kann bezüglich der Bauteile 66 und 68 auch vertauscht sein.

Das Bewegungsteil 66 kann zur Verminderung der zu seinem Drehantrieb benötigten Antriebskraft auf Wälzlagern 88, die in der Bodenplatte 18 gelagert sein können, aufliegen und dort reibungsarm zur Rotation um die Drehachse R66 abgestützt sein.

Als einem bevorzugten vorrichtungsgestellfesten Bauteil kann dem Komplementbauteil 68 eine besondere Bedeutung in der Lagerung und Führung benachbarter Bauteile zukommen.

Das Komplementbauteil 68 selbst kann über die Montageschäfte 20 am Vorrichtungsgestell 12 festgelegt sein. Weiter kann ein Bauteil aus Komplementbauteil 68 und Antriebsteil 26 einen Vorsprung 90, vorzugsweise Ringvorsprung 90, aufweisen, welcher in eine entsprechende zur Rotationsachse R26 zentrische Ringausnehmung 92 am jeweils anderen Bauteil eingreift. Die beiden Bauteile 68 und 26 können somit über den Ringvorsprung 90 in ihrer Relativlage zueinander radial wie axial durch das Zusammenwirken von Vorsprung 90 und Ausnehmung 92 mit ausreichender Genauigkeit festgelegt sein.

Ebenso kann das Komplementbauteil 68 eine in axialer Richtung abstehende und sich wenigstens in Umfangsabschnitten, vorzugsweise jedoch vollständig umlaufend erstreckende Schürze 94 aufweisen, welche im Zusammenwirken mit der die Mantelfläche 67 aufweisenden Umfangswandung 96 des Bewegungsbauteils 66 letzteres axial und radial bezüglich des Komplementbauteils 68 zentrieren kann.

Die Umfangswandung 96 des Bewegungsteils 66 kann mit einem Umfangsanschlag 97 ausgebildet sein, welcher beispielsweise eine fensterartige radiale Durchbrechung der Umfangswand 96 des Bewegungsteils 66 in Umfangsrichtung begrenzen kann. Dieser Umfangsanschlag 97 kann mit einem Radialvorsprung am Komplementbauteil 68 zusammenwirken, welcher radial so weit von dem Komplementbauteil 68 vorsteht, dass er in Anlageeingriff mit dem Umfangsanschlag 97 bringbar ist. Vorzugsweise weist die zweite Fixiervorrichtung 24 wenigstens zwei Umfangsanschläge auf, welche den Relativverdrehweg des Bewegungsteils 66 relativ zum Komplementbauteil 68 in zwei Richtungen begrenzen. Zu den Wirkungen der relativverdrehwegbegrenzenden Anschläge und Gegenanschläge gilt das oben zu den Anschlägen bzw. Gegenanschlägen 60 und 62 Gesagte entsprechend. Abweichend von dem beschriebenen Zustand können die den relativverdrehwegbegrenzenden Anschläge und Gegenanschläge auch konstruktiv anders ausgestaltet sein. Beispielsweise kann das Komplementbauteil 68 eine radiale Ausnehmung aufweisen, deren Umfangsenden Anschläge bilden, wobei in diese Ausnehmung ein Radialfortsatz des Bewegungsteils 66 einragen kann. Schließlich können die Anschläge und Gegenanschläge auch durch gesonderte an den genannten Bauteilen oder am Bewegungsteil 66 und einem beliebigen anderen gestellfesten Bauteil, etwa der Bodenplatte 18, vorgesehen sein.

Durch Relativverlagerung des Bewegungsteils 66 relativ zum Komplementbauteil 68 um die Relativdrehachse R66 kann das wenigstens eine Festlegeelement 84 vermittels der an ihm vorgesehenen Führungsausbildungen im Zusammenwirken mit der Antriebssteuerkurve 86 und der nicht dargestellten Führungskurve im Bewegungsteil 66 relativ zum zweiten Aufnahmebereich 76 verlagert werden, genauer zwischen Stellungen, in denen das wenigstens eine Festlegeelement 84 weiter in den zweiten Aufnahmebereich 76 einragt, und Stellungen, in welchen das wenigstens eine Festlegeelement 84 weniger tief in den zweiten Aufnahmebereich 76 einragt. Somit kann durch Relativverlagerung des Bewegungsteils 66 relativ zum Komplementbauteil 68 mit dem wenigstens einen Festlegeelement 84 das zweite Schraubverbindungsbauteil, hier in Form eines Behälterkörpers 50, ebenso in der zweiten Fixiervorrichtung 24 immobilisiert werden, wie das erste Schraubverbindungsbauteil, hier in Form eines Behälterdeckels 48, mittels Relativbewegung zwischen Antriebsteil 26 und Ergänzungsbauteil 28 durch das wenigstens eine Fixierelement 56 in der ersten Fixiervorrichtung 22 immobilisiert werden kann. Diese Funktionsweise der Immobilisierung und des Lösens oder/und Herstellens einer Schraubverbindung wird nachfolgend anhand der Fig. 3a bis 6a und 3b bis 6b näher erläutert.

Dabei wird zunächst ausgegangen von einem Zustand, in welchem das wenigstens eine Festlegeelement 84 ebenso wie das wenigstens eine Fixierelement 56 weit aus dem ersten Aufnahmebereich 36 und dem zweiten Aufnahmebereich 76 zurückgezogen ist, so dass ein Behälter 46 aus einem Behälterkörper 50, auf den ein Behälterdeckel 48 aufgeschraubt ist, von einem Handhabungsgerät, etwa einem Roboter, in die Aufnahmebereiche 36 und 76 eingeführt werden kann. In diesem Zustand kann das Handhabungsgerät nach dem Einführen des Behälters 46 in die Aufnahmebereiche 36 und 76 dann wieder freigeben, wenn an der Vorrichtung 10, wie es grundsätzlich bevorzugt ist, eine passive Haltevorrichtung 98 vorgesehen ist, die ein Verlieren des Behälters 46 oder allgemein von Schraubverbindungsbauteilen, vor einer Immobilisierung wenigstens eines der Schraubverbindungsbauteile 48 und 50 verhindert.

Hierzu kann die passive Haltevorrichtung 98 eine Mehrzahl von Blattfedern 100 aufweisen, welche um eine Durchgangsöffnung 102 in der Bodenplatte 18 herum angeordnet sein können und im unbelasteten Zustand so weit radial zur Aufnahmeachse A hin vorragen, dass ein zweites Schraubverbindungsbauteil mit einem zu erwartenden Mindestdurchmesser die Blattfedern 100 unter Beibehaltung eines Anlageeingriffs so weit auslenkt, dass durch diese eine ausreichende Haltekraft erzielt wird.

Ein solcher Zustand unmittelbar nach Einführen des Behälters 46 in die Aufnahmebereiche 36 und 76 ist in den Fig. 3a und 3b beispielhaft gezeigt.

Fig. 3a gewährt dabei einen Blick längs der Aufnahmeachse A von der Seite der Bodenplatte 18 auf die Seite des Komplementbauteils 68, die dem in Fig. 3a weggelassenen Bewegungsteil 66 zugewandt ist.

Ebenso gewährt Fig. 3b eine Ansicht auf die dem Ergänzungsbauteil 28 zugewandte Seite des Antriebsteils 26 (siehe Ansichtspfeile IIIb-IIIb in Fig. 2). Der Kupplungsabschnitt 40 und das Ergänzungsbauteil 28 sind in Fig. 3b nicht dargestellt.

In Fig. 3a sind an den rollenförmig ausgebildeten Festlegeelementen 84 die Wellen- bzw. Achsfortsätze 104 zu erkennen, welche in die Führungskurve des nicht dargestellten Bewegungsteils 66 eingreifen. Beispielhaft ist ein Führungskurvenabschnitt 106 strichliniert in Fig. 3a an dem untersten Festlegeelement 84 angedeutet.

Ebenso sind in Fig. 3b an den Fixierelementen 56 die Führungsausbildungen 108 in Form von Wellen- bzw. Achsfortsätzen zu erkennen, welche in jeweils zugeordneten Führungskurvenabschnitten des in Fig. 3b nicht dargestellten Ergänzungsbauteils 28 geführt sind. Auch hier ist beispielhaft ein Führungskurvenabschnitt 110 des Ergänzungsbauteils 28 strichliniert dargestellt.

Die in den Fig. 3a und 3b nicht dargestellten Führungskurvenabschnitte 106 und 110, welche den übrigen Festlegeelementen 84 bzw. Fixierelementen 56 zugeordnet sind, verlaufen ebenfalls wie die dargestellten Führungskurvenabschnitte 106 bzw. 110 vorzugsweise radial geradlinig auf die Aufnahmeachse A zu.

In den Fig. 3a und 3b befinden sich die Festlegeelemente 84 und die Fixierelemente 56 in ihren maximal weit von der Aufnahmeachse A zurückgezogenen Positionen.

Der Vollständigkeit halber sei darauf hingewiesen, dass die Antriebssteuerkurven 58 und 86 der ersten Fixiervorrichtung 22 bzw. der zweiten Fixiervorrichtung 24 im dargestellten Beispiel vollständig um die Aufnahmeachse A bzw. die Aufnahmebereiche 36 und 76 umlaufend ausgebildet sein können, wobei zur Vereinheitlichung der Verstellbewegung der Fixierelemente 56 einerseits und der Verlagerungsbewegung der Festlegeelemente 84 andererseits die Antriebssteuerkurven 58 und 86 vorzugsweise identisch ausgebildet sein können.

Bevorzugt sind die Führungskurvenabschnitte 106 bzw. 110 mit einem äquidistanten Winkel von 360:N, wobei N der Anzahl an Fixier- bzw. Festlegeelementen entspricht, voneinander beabstandet, so dass auch die von ihnen geführten Fixier- und Festlegeelemente 56 bzw. 84 in Umfangsrichtung um die Aufnahmeachse A unabhängig von ihrer jeweiligen Verstell- bzw. Verlagerungsposition äquidistant angeordnet sind.

Zur Vereinheitlichung der Verstellbewegung der Fixierelemente 56 oder/und der Verlagerungsbewegung der Festlegeelemente 84 sind bevorzugt die zugeordneten Antriebssteuerkurven 58 bzw. 86 aus N gleichen Streckenabschnitten zusammengesetzt, wobei N wiederum der Anzahl an in einer Antriebssteuerkurve 58 oder 86 angetriebenen Fixier- bzw. Festlegeelementen entspricht.

Dann, wenn die Antriebssteuerkurve nicht zusammenhängend um die Aufnahmeachse A umlaufend ausgebildet ist, sondern aus einzelnen gesonderten Streckenabschnitten gebildet ist, ist die Gesamtheit aller zu ein- und derselben Antriebssteuerkurve gehörenden Kurvenabschnitte als Antriebssteuerkurve im Sinne der vorliegenden Anmeldung zu verstehen.

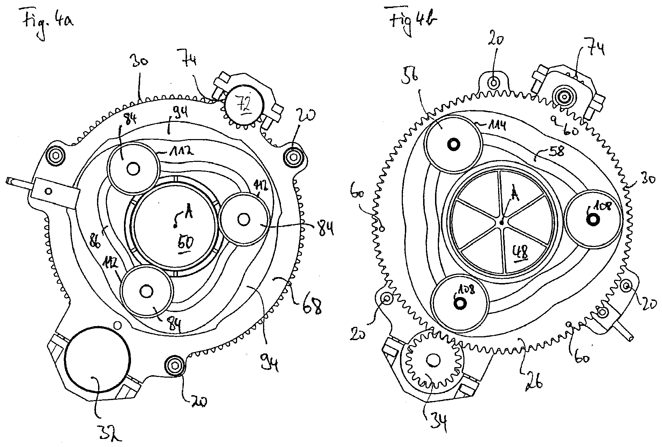

In Fig. 4a wurde das in den Fig. 3a und 4a nicht dargestellte Bewegungsteil 66 im Uhrzeigersinn (gemäß Betrachtungsrichtung der Fig. 4a) durch den Antrieb 72 zur Verlagerung angetrieben, so dass die Festlegeelemente 84 der Antriebssteuerkurve 86 und den Führungskurven 106 folgend ebenfalls im Uhrzeigersinn um die Aufnahmeachse A herum und zugleich in radialer Richtung zur Aufnahmeachse A hin, also in den zweiten Aufnahmebereich 76 hinein verlagert wurden.

Um ein möglichst schonendes und gleichzeitig sicheres Anlegen der Festlegeelemente 84 an einer Außenfläche des Behälterkörpers 50 gewährleisten zu können, weisen bevorzugt die Mantelflächen der rollenförmig ausgebildeten Festlegeelemente 84 einen Rollengrundkörper 111 auf, welcher mit einer Kunststoff- oder Elastomerschicht 112 beschichtet ist. Die Beschichtung kann durch Überstülpen von Kunststoff- oder Elastomerringen über die Mantelfläche des Rollengrundkörpers 111 erfolgen.

Dabei kann die axiale Schürze 94 des Komplementbauteils 86 parallel zur Kontur der Antriebssteuerfläche 86 verlaufen und als Abroll- oder Anlagefläche für die Mantelfläche der Festlegeelemente 84 dienen, um einen für eine Immobilisierung des Behälterkörpers 50 ausreichenden Druck mit den Festlegeelementen 84 auf den Behälterkörper 50 ausüben zu können.

In Fig. 4a liegen die durch Elastomerbeschichtung weichen und zugleich reibungserhöhten Mantelflächen der Festlegeelemente 84 an der Außenfläche des Behälterkörpers 50 an und immobilisieren so den Behälterkörper 50.

Wie in Fig. 4b zu erkennen ist, wurden die Fixierelemente 56 der ersten Fixiervorrichtung noch nicht verlagert. Die Stellung der ersten Fixiervorrichtung in Fig. 4b entspricht jener von Fig. 3b.

Ergänzend sei darauf hingewiesen, dass auch die Fixierelemente 56 der ersten Fixiervorrichtung 22 einen Rollengrundkörper aufweisen können, der zur Schonung der Oberflächen des ersten Schraubverbindungsbauteils (Behälterdeckel 48) mit einer Kunststoff- oder Elastomerschicht 114 überzogen sein kann. Für diese Beschichtung gilt das oben zur Beschichtung 112 der Festlegeelemente 84 Gesagte entsprechend.

Ebenso kann an dem die Antriebssteuerkurve 58 aufweisenden Antriebsteil 26 eine Innenwandung als Abroll- bzw. Anlagefläche für die Fixierelemente 56 dienen, um diese mit ausreichend Anpressdruck an das ihnen zugeordnete erste Schraubverbindungsbauteil 48 andrücken zu können.

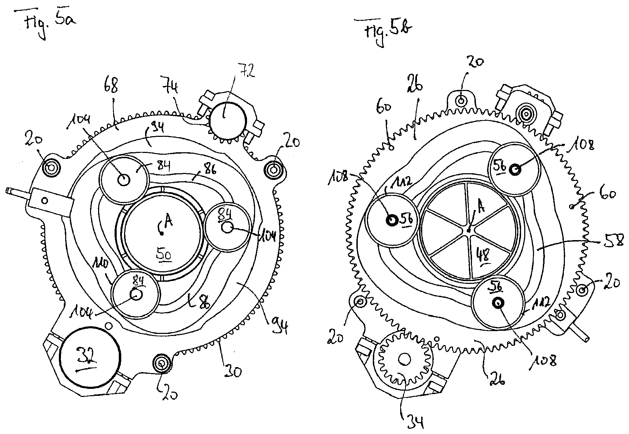

In Fig. 5a ist zu erkennen, dass die zweite Fixiervorrichtung in bereits eingenommenem Immobilisierungszustand weiter aufrecht erhält. Die Stellung der zweiten Fixiervorrichtung 24 in Fig. 5a ist die gleiche wie jene von Fig. 4a.

Dagegen wurde in Fig. 5b das Antriebsteil 26 durch den ersten Antrieb 32 vermittels des Antriebsritzels 34 - gemäß Betrachtungsrichtung der Fig. 5 - gegen den Uhrzeigersinn bewegt, bis der Behälterdeckel 48 durch die drei Fixierelemente 56 klemmend immobilisiert ist. Ebenso wie die Festlegeelemente 84 der zweiten Fixiervorrichtung 24 wirken die Fixierelemente 56 der ersten Fixiervorrichtung 22 in der Art von Klemmbacken und klemmen den Behälterdeckel 48 zwischen sich ein. Eine weitere Verdrehung des Antriebsteils 26 relativ zum Vorrichtungsgestell 26 und ebenso relativ zur zweiten Fixiervorrichtung 24 kann zu keiner weiteren Annäherung der Fixierelemente 56 an den Behälterdeckel 48 führen, da dieser bereits bis zur Anlage an diesem maximal angenähert sind.

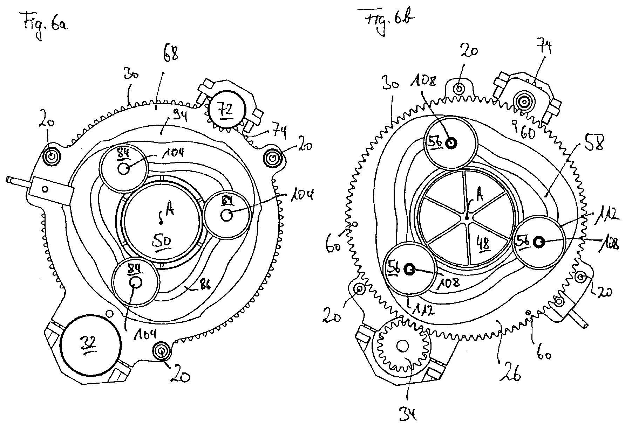

Ein weiterer Antrieb des Antriebsteils 26 - gemäß der Betrachtungsrichtung der Fig. 5b und 6b - entgegen dem Uhrzeigersinn führt dazu, dass das vom ersten Antrieb 32 auf das Antriebsteil 26 übertragene Antriebsdrehmoment von diesem über die zusammen mit dem Behälterdeckel 48 immobilisierten Fixierelemente 56 auf das in Fig. 6b nicht dargestellte Ergänzungsbauteil 28 übertragen wird, so dass das zwischen dem Kupplungsabschnitt 40 und dem Ergänzungsbauteil 28 maximal übertragbare Grenzdrehmoment überschritten wird.

Ab diesem Zeitpunkt ist das Ergänzungsbauteil 28 nicht mehr gestellfest, sondern wird gemeinsam mit dem Bewegungsteil 26, den Fixierelementen 56 und dem von diesen immobilisierten Behälterdeckel 48 um die mit der Aufnahmeachse A zusammenfallende Relativdrehachse R28 rotiert. Dadurch wird eine zwischen dem Behälterkörper 50 und dem Behälterdeckel 48 bestehende Schraubverbindung gelöst, oder, je nach Drehrichtung, eine nicht bestehende Schraubverbindung herstellt.

Da von dem ersten Antrieb 32 im dargestellten Beispiel nicht nur die Kraft zur Immobilisierung des Behälterdeckels 48, sondern auch das Drehmoment zum Lösen oder/und Herstellen einer Schraubverbindung zwischen dem Behälterdeckel 48 und dem Behälterkörper 50 aufgebracht werden muss und da weiter bei Elektromotoren, die für die Antriebe 32 und 72 bevorzugt eingesetzt werden, das lieferbare Antriebsdrehmoment das Motorvolumen wesentlich bestimmt, ist der erste Antrieb 32 in der Regel voluminöser als der zweite Antrieb 72.

Da weiter die den einzelnen Fixier- bzw. Festlegeelementen 56 bzw. 84 zugeordneten Abschnitte der Antriebssteuerkurven 58 bzw. 86 bezüglich einer die Aufnahmeachse A enthaltenden Symmetrieebene symmetrisch ausgebildet sind, kann mit dem oben beschriebenen Prinzip der Nutzung des ersten Antriebs nicht nur zum Immobilisieren eines Schraubverbindungsbauteils, sondern auch zur Rotation desselben relativ zum anderen Schraubverbindungsbauteil, nicht nur eine bestehende Schraubverbindung gelöst, sondern auch eine nicht bestehende Schraubverbindung hergestellt werden. Hierzu ist in dem dargestellten Beispiel schlichtweg die Drehrichtung des ersten Antriebs 32 umzukehren.

Die in Figur 6a dargestellte Stellung der zweiten Fixiervorrichtung 22 entspricht jener von Figur 5b.

In den Figuren 3a und 3b ist punktiert in Figur 3a ein Aktivabschnitt 86a der Antriebssteuerkurve 86 dargestellt, welcher sich im vorliegenden Beispiel aus den geradlinigen Flankenabschnitten des Führungskurvenabschnitts 106 ableiten lässt, mit welchem die Führungsausbildung 104 des Festlegeelements 84 in Gleitanlageeingriff gelangen kann.

In dem Aktivabschnitt 86a, welcher bevorzugt für jedes Festlegeelement 84, besonders bevorzugt für jedes Festlegeelement 84 gleich, vorgesehen ist, ist bevorzugt die Umfangsverlaufskomponente der Antriebssteuerkurve 86 größer als die radiale Verlaufskomponente. Dies bedeutet, dass sich die Umfangskoordinate der Antriebssteuerkurve 86 bei Fortschreiten längs der Antriebssteuerkurve zumindest im Aktivabschnitt 86a stärker ändert als die radiale Koordinate.

Entsprechendes gilt für den in Figur 3b dargestellten Aktivabschnitt 58a der Antriebssteuerkurve 58 der ersten Fixiervorrichtung 22.

An der Vorrichtung 10 können überdies Sensoren vorgesehen sein, welche Stellungen sensierter Bauteile relativ zum Vorrichtungsgestell 12 erfassen können.

Mit Verweis auf Fig. 1 kann beispielsweise in der Bodenplatte 18 ein Sensor 114 vorgesehen sein, welcher eine Relativstellung des Bewegungsteils 66 relativ zur Bodenplatte 18 erfassen kann, beispielsweise jene Stellung, welche die in Fig. 3a gezeigte maximal zurückgezogene Stellung der Festlegeelemente 84 bewirkt. Hierzu kann auf der dem Sensor 114 zugewandten Seite des Bewegungsteils 66 ein Erfassungsteil vorgesehen sein, welches bewirkt, dass der Sensor 114 dann einen ersten Signalpegel aussendet, wenn sich das Erfassungsteil über dem Sensor 114 befindet und einen davon abweichenden zweiten Signalpegel aussendet, wenn sich das Erfassungsteil des Bewegungsteils 66 nicht über dem Sensor 114 befindet. Auf diese Weise kann sichergestellt sein und sensorisch erfasst werden, dass die zweite Fixiervorrichtung 24 zur Aufnahme eines zweiten Schraubverbindungsbauteils bereit ist und eine Kollision des in den zweiten Aufnahmebereich 76 einzuführenden zweiten Schraubverbindungsbauteils 50 mit dem wenigstens einen Festlegeelement 84 nicht zu befürchten ist.

In ähnlicher Weise kann an dem Komplementbauteil 68 ein Sensor 116 vorgesehen sein, welcher durch ein auf der dem Sensor 116 zugewandten Stirnseite des Antriebsteils 26 vorgesehenes Erfassungsteil in der oben beschriebenen Weise erfasst, ob sich das Antriebsteil 26 in einer vorbestimmten Stellung befindet oder nicht. Dies kann beispielsweise die in Fig. 3 gezeigte Stellung sein, der ebenfalls eine maximal aus dem ersten Aufnahmebereich 36 zurückgezogene Position des wenigstens einen Fixierelements 56 zugeordnet ist.

Schließlich kann die Verwendung eines weiteren Sensors 118 am vorrichtungsgestellfesten Kupplungsabschnitt 40 zur Überwachung einer ausgezeichneten Stellung des Ergänzungsbauteils 28 von Vorteil sein, so dass somit auch das Ergänzungsbauteil 28 und das Antriebsteil 26 in eine vorbestimmte Relativstellung zueinander bringbar sein können, wozu auch die bereits beschriebenen Anschlag- und Gegenanschlagmittel 60 bzw. 62 dienen. Dadurch ist die in Fig. 3b gezeigte Stellung der ersten Fixiervorrichtung 22 sicher reproduzierbar.

## Patentansprüche

1. Vorrichtung zum automatisierten Lösen oder/und Herstellen einer Schraubverbindung zwischen einem Behälterdeckel (40) als einem Schraubverbindungsbauteil aus einem ersten (48) und einem zweiten Schraubverbindungsbauteil (50) und einem Behälterkörper (50) als dem jeweils anderen Schraubverbindungsbauteil aus dem ersten (48) und dem zweiten Schraubverbindungsbauteil (50), mit einem Vorrichtungsgestell (12) sowie mit einer ersten Fixiervorrichtung (22) zur Fixierung des ersten Schraubverbindungsbauteils (48) und mit einer zweiten Fixiervorrichtung (24) zur Fixierung des zweiten Schraubverbindungsbauteils (50), wobei die erste Fixiervorrichtung (22) einen ersten Aufnahmebereich (36) zur Aufnahme des ersten Schraubverbindungsbauteils (48) umgibt und wobei die zweite Fixiervorrichtung (24) einen zweiten Aufnahmebereich (76) zur Aufnahme des mit dem ersten (48) verschraubten oder zu verschraubenden zweiten Schraubverbindungsbauteils (50) aufweist, wobei die erste Fixiervorrichtung (22) ein mit einem ersten Antrieb (32) in Antriebswirkverbindung stehendes relativ zum Vorrichtungsgestell (12) bewegliches Antriebsteil (26) und ein wenigstens bis zur Herstellung eines Fixiereingriffs zwischen der ersten Fixiervorrichtung (22) und dem ersten Schraubverbindungsbauteil (48) gestellfestes Ergänzungsbauteil (28) aufweist, welche jeweils den ersten Aufnahmebereich (36) umgeben und welche wenigstens ein Fixierelement (56) derart mittels Führungs- und Verstellmitteln (58, 110) relativ (28) verstellbar aufnehmen, dass eine Relativbewegung zwischen Antriebsteil (26) und Ergänzungsbauteil (28) eine Verstellung des wenigstens einen Fixierelements (56) in den ersten Aufnahmebereich (36) hinein und aus diesem heraus bewirkt,
**dadurch gekennzeichnet, dass** die zweite Fixiervorrichtung (24) ein mit einem vom ersten gesondert ausgebildeten und betreibbaren zweiten Antrieb (72) in Antriebswirkverbindung stehendes relativ zum Vorrichtungsgestell bewegliches Bewegungsteil (66) und ein gestellfestes Komplementbauteil (68) aufweist, welche jeweils den zweiten Aufnahmebereich (76) umgeben und welche wenigstens ein Festlegeelement (84) derart mittels Führungs- und Verstellmitteln (86, 106) relativ zum Vorrichtungsgestell (12) sowie zum Bewegungsteil (66) und zum Komplementbauteil (68) verlagerbar aufnehmen, dass eine Relativbewegung zwischen Bewegungsteil (66) und Komplementbauteil (68) eine Verlagerung des wenigstens einen Festlegeelements (84) in den zweiten Aufnahmebereich (76) hinein und aus diesem heraus bewirkt, sowie dadurch, dass das Ergänzungsbauteil (28) der ersten Fixiervorrichtung (22) relativ zum Vorrichtungsgestell (12) beweglich gelagert ist und zwischen Ergänzungsbauteil (28) und Vorrichtungsgestell (12) eine drehmomentabhängig wirkende Kupplung (39) derart vorgesehen ist, dass sie das Ergänzungsbauteil (28) dann, wenn auf das Ergänzungsbauteil (28) relativ zum Vorrichtungsgestell (12) ein Drehmoment einwirkt, das kleiner als ein vorbestimmtes Grenzmoment ist, als im Wesentlichen gestellfestes Bauteil mit dem Vorrichtungsgestell (12) koppelt und dass sie dann, wenn auf das Ergänzungsbauteil (28) relativ zum Vorrichtungsgestell (12) ein Drehmoment einwirkt, das größer als oder gleich groß ist wie ein vorbestimmtes Grenzmoment ist, eine Relativbewegung zwischen Ergänzungsbauteil (28) und Vorrichtungsgestell (12) gestattet, so dass die Vorrichtung außer dem ersten (32) und dem zweiten Antrieb (72) keine weiteren Antriebe aufweist, um das erste (48) und das zweite Schraubverbindungsbauteil (50) zu spannen und die Schraubverbindung zu lösen oder/und herzustellen.

2. Vorrichtung nach Anspruch 1,
**dadurch gekennzeichnet, dass** als Führungs- und Verstellmittel (86, 106) der zweiten Fixiervorrichtung (24) in dem Bewegungsteil (66) und dem Komplementbauteil (68) jeweils wenigstens eine Steuerkurve (86, 106) vorgesehen ist, mit denen eine Führungsausbildung (104) des wenigstens einen Festlegeelements (84) in Anlageeingriff, insbesondere während der Verlagerung des wenigstens einen Festlegeelements (84) in Gleitanlageeingriff, steht, wobei die Vorrichtung vorzugsweise weiter **dadurch gekennzeichnet ist, dass** das Bewegungsteil (66) zur Ausführung einer Relativrotation relativ zum Komplementbauteil (68) um eine den zweiten Aufnahmebereich (76) durchsetzende Rotationsachse (R66) ausgebildet ist, wobei eine an einem Bauteil aus dem Bewegungsteil (66) und dem Komplementbauteil (68), vorzugsweise dem Komplementbauteil (68), vorgesehene Steuerkurve als Antriebssteuerkurve (86) eine Komponente in Umfangsrichtung um die Rotationsachse (R66) und eine radiale Komponente in Richtung auf die Rotationsachse (R66) zu und von dieser weg aufweist und an dem jeweils anderen Bauteil, vorzugsweise dem Bewegungsteil (68), eine Steuerkurve als Führungskurve (106) mit einer Komponente in radialer Richtung vorgesehen ist.

3. Vorrichtung nach Anspruch 2,
**dadurch gekennzeichnet, dass** die Komponente in Umfangsrichtung der Antriebssteuerkurve (86) in einem zur radialen Verlagerung des wenigstens einen Festlegeelements (84) beitragenden Aktivabschnitt (86a) größer ist als oder gleich groß ist wie die radiale Komponente der Antriebssteuerkurve (86) oder/und dass die Führungskurve (106) nur eine Komponente in radialer Richtung und keine Komponente in Umfangsrichtung aufweist.

4. Vorrichtung nach einem der vorhergehenden Ansprüche,
**dadurch gekennzeichnet, dass** das wenigstens eine Festlegungselement (84) eine Rolle umfasst, vorzugsweise eine Rolle mit durch Erhöhung der Oberflächenrauigkeit oder/und durch Beschichtung mit einem vom Rollengrundkörper (111) verschiedenen Beschichtungsmaterial reibungserhöhter Mantelfläche (112), mit von der Rolle in Richtung der Rollenachse axial abstehenden Achs- oder Wellenstümpfen (104), welche die mit den Führungs- und Verstellmitteln (86, 106) zusammenwirkenden Führungsausbildungen aufweisen.

5. Vorrichtung nach Anspruch 4,
**dadurch gekennzeichnet, dass** von der Rolle ausgehend zu beiden entgegengesetzten Seiten je ein Achs- oder Wellenstumpf (104) absteht, von denen einer mit der am Bewegungsteil (66) vorgesehenen Steuerkurve (106) und der jeweils andere mit der am Komplementbauteil (68) vorgesehenen Steuerkurve (86) als Führungsausbildung zusammenwirkt.

6. Vorrichtung nach einem der vorhergehenden Ansprüche,
**dadurch gekennzeichnet, dass** das Bewegungsteil (66) eine sich um eine Scheibenachse (A) erstreckende Scheibe umfasst, vorzugsweise eine solche Scheibe ist, in deren die Scheibenachse (A) enthaltendem Zentralbereich eine zum zweiten Aufnahmebereich (76) beitragende Ausnehmung (80) vorgesehen ist, in deren in Richtung der Scheibenachse (A) weisender Stirnfläche die Steuerkurve (86) des Bewegungsteils (66) vorgesehen ist und in deren radial äußerer Mantelfläche eine Eingriffsausbildung (70), vorteilhafterweise Formschlusseingriffsausbildung (70), insbesondere Verzahnung (70), zum Kraft und Bewegung übertragenden Eingriff mit dem zweiten Antrieb (72) vorgesehen ist, wobei bevorzugt die Scheibenachse (A) mit einer den zweiten Aufnahmebereich (76) zentral durchsetzenden Aufnahmeachse (A) und besonders bevorzugt mit der Rotationsachse (R66) des Bewegungsteils (66) zusammenfällt.

7. Vorrichtung nach einem der vorhergehenden Ansprüche,
**dadurch gekennzeichnet, dass** ein mechanischer Anschlag (97) vorgesehen ist, welcher unabhängig vom Vorhandensein eines zweiten Schraubverbindungsbauteils (50) im zweiten Aufnahmebereich (76) eine Relativbewegung des Bewegungsteils (66) relativ zum Vorrichtungsgestell (12) begrenzt, vorzugsweise in beiden Richtungen begrenzt.

8. Vorrichtung nach einem der vorhergehenden Ansprüche,
**dadurch gekennzeichnet, dass** die drehmomentabhängig wirkende Kupplung (39) eine Hysteresekupplung (39) ist, mit einer Mehrzahl von Magneten (42), welche an einem Abschnitt aus einem Kupplungsabschnitt (40) des Vorrichtungsgestells (12) und einem diesem über einen Luftspalt (45) hinweg gegenüberliegenden Gegenkupplungsabschnitt (bei 44) des Ergänzungsbauteils (28) längs eines Relativbewegungswegs zwischen Vorrichtungsgestell (12) und Ergänzungsbauteil (28) aufeinander folgend vorgesehen sind, und mit einem Hysteresebauteil (44), welches einen unmagnetisierten dauermagnetisierbaren Werkstoff umfassend über den Luftspalt (45) hinweg am jeweils anderen Abschnitt aus Kupplungsabschnitt (40) und Gegenkupplungsabschnitt (bei 44) den Magneten (42) gegenüberliegend vorgesehen ist.

9. Vorrichtung nach Anspruch 8,
**dadurch gekennzeichnet, dass** das Ergänzungsbauteil (28) eine sich um eine Scheibenachse (A) erstreckende Scheibe umfasst, vorzugsweise eine solche Scheibe ist, in deren die Scheibenachse (A) enthaltendem Zentralbereich eine zum ersten Aufnahmebereich (36) beitragende Ausnehmung (28a) vorgesehen ist, mit einer in Richtung der Scheibenachse (A) weisenden Stirnfläche, in der der Gegenkupplungsabschnitt (bei 44) ausgebildet ist, wobei bevorzugt die Scheibenachse (A) mit einer den ersten Aufnahmebereich (36) zentral durchsetzenden Aufnahmeachse (A) und besonders bevorzugt mit einer Relativrotationsachse (R28) des Ergänzungsbauteils (28) zusammenfällt, um welche das Ergänzungsbauteil (28) relativ zum Vorrichtungsgestell (12) als die Relativbewegung drehbar ist.

10. Vorrichtung nach Anspruch 8 oder 9,
**dadurch gekennzeichnet, dass** das Ergänzungsbauteil (28) eine sich um eine Scheibenachse (A) erstreckende Scheibe umfasst, vorzugsweise eine solche Scheibe ist, in deren die Scheibenachse (A) enthaltendem Zentralbereich eine zum ersten Aufnahmebereich (36) beitragende Ausnehmung (28a) vorgesehen ist, mit einer in Richtung der Scheibenachse (A) weisenden Stirnfläche, in der eine Steuerkurve (110) der Führungs- und Verstellmittel (58, 110) der ersten Fixiervorrichtung (22) vorgesehen ist, wobei bevorzugt die Scheibenachse (A) mit einer den ersten Aufnahmebereich (36) zentral durchsetzenden Aufnahmeachse (A) und besonders bevorzugt mit einer Relativrotationsachse (R28) des Ergänzungsbauteils (28) zusammenfällt, um welche das Ergänzungsbauteil (28) relativ zum Vorrichtungsgestell (12) als die Relativbewegung drehbar ist.

11. Vorrichtung nach einem der Ansprüche 9 oder 10,
**dadurch gekennzeichnet, dass** am Ergänzungsbauteil (28) an seinem der zentralen Ausnehmung (28a) zugewandten Rand eine Einführschräge (52) zur Unterstützung einer Einführung von Schraubverbindungsbauteilen (48, 50) in den ersten Aufnahmebereich (36) aufweist.

12. Vorrichtung nach einem der vorhergehenden Ansprüche,
**dadurch gekennzeichnet, dass** das Ergänzungsbauteil (28) oder/und das Antriebsteil (26) oder/und das Bewegungsteil (66) um parallele, vorzugsweise um koaxiale, Relativrotationsachsen (R26, R28, R66) relativ zum Vorrichtungsgestell (12) drehbar vorgesehen sind.

13. Vorrichtung nach einem der vorhergehenden Ansprüche, unter Einbeziehung des Anspruchs 8,
**dadurch gekennzeichnet, dass** der erste (36) oder/und der zweite Aufnahmebereich (76) eine Aufnahmeachse (A) definieren, bezüglich welcher in axialer Richtung der Kupplungsabschnitt (40), das Ergänzungsbauteil (28), das Antriebsteil (26), das Komplementbauteil (68) und das Bewegungsteil (66) in dieser Reihenfolge von einem Einführende (51) der Vorrichtung aus vorgesehen sind.

14. Vorrichtung nach einem der vorhergehenden Ansprüche,
**dadurch gekennzeichnet, dass** die Vorrichtung an einem ihrer Längsenden eine Spanneinrichtung (98) aufweist, welche dazu ausgebildet ist, den Behälterdeckel (48) oder/und den Behälterkörper (50) nach dessen bzw. deren Einführung in die Vorrichtung auch dann in der Vorrichtung zu halten, wenn der Behälterdeckel (48) oder/und der Behälterkörper (50) nicht durch die Fixiervorrichtungen (22, 24) fixiert sind.

15. Verwendung einer Vorrichtung nach einem der vorhergehenden Ansprüche zum Öffnen und Schließen von Schraubverbindungen zwischen einem Behälterdeckel und einem Behälterkörper.

## Claims

1. Device for the automated release or/and realisation of a screw connection between a container lid (40) as one screw connection component out of a first (48) and a second screw connection component (50) and a container body (50) as the respective other screw connection component out of the first (48) and the second screw connection component (50), with a device frame (12) as well as with a first fixing device (22) for fixing the first screw connection component (48) and with a second fixing device (24) for fixing the second screw connection component (50), wherein the first fixing device (22) surrounds a first receiving area (36) for receiving the first screw connection component (48) and wherein the second fixing device (24) comprises a second receiving area (76) for receiving the second screw connection component (50) screwed or to be screwed to the first screw connection component (48), wherein the first fixing device (22) comprises a first drive part (26) in drive effect connection with a first drive (32), and moveable in relation to the device frame (12) and a supplementary component (28) which is fixed to the frame at least until a fixing engagement has been realised between the first fixing device (22) and the first screw connection component (48), which respectively surround the first receiving area (36) and which receive at least one fixing element (56) relatively (28) adjustable by means of guiding and adjusting means (58, 110) in such a way that a relative movement between the first drive part (26) and the supplementary component (28) causes an adjustment of the at least one fixing element (56) into and out of the first receiving area (36),
**characterized in that** the second fixing device (24) comprises a movement part (66) in drive effect communication with a second drive (72) formed and operable separately from the first drive, moveable relative to the device frame and a complementary component (68) fixed at the frame, which respectively surround the second receiving area (76) and which receive at least one fixation element (84) in such a way by means of guiding and adjustment means (86, 106), displaceably relative to the device frame (12) as well as to the movement part (66) and to the complementary component (68), that a relative movement between the movement part (66) and the complementary component (68) causes a displacement of the at least one fixation element (84) into and out of the second receiving area (76), as well as **in that** the supplementary component (28) of the first fixing device (22) is supported moveably relative to the device frame (12) and **in that** a coupling (39) acting depending on the torque is provided in such a way that it couples the supplementary component (28) with the device frame (12) as a component substantially fixed at the frame when a torque acts on the supplementary component (28) relative to the device frame (12) which is smaller than a predefined threshold torque, and **in that** when a torque which is bigger than or as big as a predefined threshold torque acts on the supplementary component (28) relative to the device frame (12) it allows a relative movement between the supplementary component (28) and the device frame (12), so that the device comprises no other drives than the first (32) and the second drive (72) for clamping the first (48) and the second screw connection component (50) and for releasing or/and realizing the screw connection.

2. Device according to claim 1,
**characterized in that** at least one control cam (86, 106) each is provided as guiding and adjustment means (86, 106) of the second fixing device (24) in the movement part (66) and the complementary component (68), with which a guiding structure (104) of the at least one fixation element (84) is in abutment engagement, in particular in sliding abutment engagement during displacement of the at least one fixation element (84), wherein the device is furthermore preferably **characterized in that** the movement part (66) is adapted for carrying out a relative rotation in relation to the complementary component (68) about a rotation axis (R66) passing through the second receiving area (76), wherein a control cam provided at one component out of movement part (66) and complementary component (68), preferably the complementary component (68), as a drive control cam (86) comprises one component in the circumferential direction about the rotation axis (R66) and a radial component towards the rotation axis (R66) and away from it and at the respective other component, preferably the movement part (68) a control cam as a guide cam (106) is provided with a component in the radial direction.

3. Device according to claim 2,
**characterized in that** the component in the circumferential direction of the drive control cam (86) in an active part (86a) contributing to the radial displacement of the at least one fixation element (84) is bigger than or as big as the radial component of the drive control cam (86) or/and **in that** the guide cam (106) comprises only a component in the radial direction and no component in the circumferential direction.

4. Device according to one of the preceding claims,
**characterized in that** the at least one fixation element (84) comprises a roller, preferably a roller with a roller shell (112) with an increased friction by increasing the surface roughness or/and by a coating with a material which is different from the roller basic body (111), with axle or shaft stubs (104) projecting axially from the roller in the direction of the roller axis, comprising the guiding structures cooperating with the guiding and adjustment means (86, 106).

5. Device according to claim 4,
**characterized in that,** starting from the roller, one axle or one shaft stub (104) projects towards each of both opposite sides, one of them cooperating with the control cam (106) provided at the movement part (66) and the other cooperating with the control cam (86) provided at the complementary component (68) as guiding structure.

6. Device according to one of the preceding claims,
**characterized in that** the movement part (66) comprises a disc extending about a disc axis (A), **in that** it preferably is a disc with a central region comprising the disc axis (A) where a recess (80) contributing to the second receiving area (76) is provided, where in the front surface oriented in the direction of the disc axis (A) the control cam (86) of the movement part (66) is provided and where in the radially outer shell surface an engagement structure (70), preferably a form fit engagement structure (70), in particular a tooth system (70), is provided for an engagement with the second drive (72) transferring force and motion, wherein preferably the disc axis (A) corresponds to a receiving axis (A) centrally passing through the second receiving area (76) and corresponds in a particularly preferred way to the axis of rotation (R66) of the movement part (66).

7. Device according to one of the preceding claims,
**characterized in that** a mechanical stop (97) is provided which independently of the presence of a second screw connection component (50) limits a relative movement of the movement part (66) with respect to the device frame (12) in the second receiving area (76), preferably in both directions.

8. Device according to one of the preceding claims,
**characterized in that** the coupling (39) acting depending on the torque is a hysteresis coupling (39) with a plurality of magnets (42) which are provided one after the other at one part out of a coupling part (40) of the device frame (12) and a counter coupling part (at 44) of the supplementary component (28) opposite the latter across an air gap (45), along a relative movement path between the device frame (12) and the supplementary component (28), and with a hysteresis component (44) comprising a non-magnetized, permanently magnetizable material which is provided across the air gap (45) at the respective other part out of coupling part (40) and counter coupling part (at 44) opposite the magnets (42).

9. Device according to claim 6,
**characterized in that** the supplementary component (28) comprises a disc extending about a disc axis (A) or **in that** it preferably is such a disc, with a central region comprising the disc axis (A) where a recess (28a) contributing to the first receiving area (36) is provided, with a front surface oriented in the direction of the disc axis (A) where the counter coupling part (at 44) is formed, wherein preferably the disc axis (A) corresponds to a receiving axis (A) passing through the first receiving area (36) and corresponds in a particularly preferred way to a relative axis of rotation (R28) of the supplementary component (28), about which the supplementary component (28) can be rotated with respect to the device frame (12) as a relative movement.

10. Device according to claim 8 or 9,
**characterized in that** the supplementary component (28) comprises a disc extending about a disc axis (A), preferably is such a disc where in the central region comprising the disc axis (A) a recess (28a) is provided contributing to the first receiving area (36), with a front surface oriented in the direction of the disc axis (A), where a drive cam (110) of the guiding and adjusting means (58, 110) of the first fixing device (22) is provided, wherein preferably the disc axis (A) corresponds to a receiving axis (A) passing through the first receiving area (36) and corresponds in a particularly preferred way to a relative axis of rotation (R28) of the supplementary component (28), about which the supplementary component (28) can be rotated with respect to the device frame (12) as the relative movement.

11. Device according to one of claims 9 or 10,
**characterized in that** it comprises at the supplementary component (28) at its border facing the central recess (28a) an insertion chamfer (52) for supporting the insertion of screw connection components (48, 50) in the first receiving area (36).

12. Device according to one of the preceding claims,
**characterized in that** the supplementary component (28) or/and the drive part (26) or/and the movement part (66) are provided rotatably with respect to the device frame (12) about parallel, preferably coaxial relative rotation axes (R26, R28, R66).

13. Device according to one of the preceding claims, taking into account claim 8
**characterized in that** the first (36) or/and the second receiving area (76) define a reception axis (A) with respect to which the coupling part (40), the supplementary component (28), the drive part (26), the complementary component (68) and the movement part (66) are provided in this order in the axial direction, starting from an insertion end (51) of the device.

14. Device according to one of the preceding claims,
**characterized in that** the device comprises a clamping device (98) at one of its longitudinal ends, which is adapted for maintaining the container lid (48) or/and the container body (50) in the device after insertion into the device, even when the container lid (48) or/and the container body (50) are not fixed by the fixing device (22, 24).

15. Use of a device according to one of the preceding claims for opening and closing of screw connections between a container lid and a container body.

## Revendications

1. Dispositif pour le relâchement ou/et la réalisation automatisée d'une connexion vissée entre un couvercle de récipient (40) en tant qu'un composant de connexion vissée d'un premier (48) et d'un deuxième composant vissé (50) et un corps de récipient (50) en tant qu'autre composant de connexion vissée du premier (48) et du deuxième composant vissé (50), avec un support de dispositif (12) et avec un premier dispositif de fixation (22) pour fixer le premier composant de connexion vissée (48) et avec un deuxième dispositif de fixation (24) pour fixer le deuxième composant de connexion vissée (50) où le premier dispositif de fixation (22) entoure une première région de réception (36) pour recevoir le premier composant de connexion vissée (48) et où le deuxième dispositif de fixation (24) comprend une deuxième région de réception (76) pour recevoir le deuxième composant vissé (50) vissé ou à visser avec le premier composant de connexion vissée (48) ou le deuxième composant à visser (50), où le premier dispositif de fixation (22) comprend une partie d'entraînement (26) en communication d'entraînement avec un premier entraînement (32) et mobile par rapport au support de dispositif (26) et au moins jusqu'à la réalisation d'un engagement de fixation entre le premier dispositif de fixation (22) et le premier composant de connexion vissée (48) un composant supplémentaire fixé au support (28), les deux parties entourant la première région de réception (36) et recevant au moins un élément de fixation (56) avec des moyens de guidage et de réglage (58, 110) de manière relativement ajustable (28) de telle sorte qu'un mouvement relatif entre la partie d'entraînement (26) et le composant supplémentaire (28) entraîne un ajustement dudit au moins un membre de fixation (56) vers la première région de réception(36) et hors de cette première région de réception,
**caractérisé en ce que** le deuxième dispositif de fixation (24) comprend une partie mobile (66), mobile par rapport au support de dispositif et en communication d'entraînement avec un deuxième entraînement (72) formé et opérable séparément du premier entraînement, et un composant complémentaire (68) fixé au support, ces deux parties entourant respectivement la deuxième région de réception (76) et recevant de manière déplaçable au moins un membre de fixation (84) par des moyens de guidage et de réglage (86, 106) par rapport au support de dispositif (12) et à la partie mobile (66) et au composant complémentaire (68) de sorte qu'un mouvement relatif entre la partie mobile (66) et le composant complémentaire (68) entraîne un déplacement dudit au moins un membre de fixation (84) vers la deuxième région de réception (76) et hors de celle-ci et parce que le composant supplémentaire (28) du premier dispositif de fixation (22) est supporté de manière mobile par rapport au support de dispositif (12) et parce qu'un accouplement agissant en fonction du couple (39) est prévu entre le composant supplémentaire (28) et le support de dispositif (12) de telle sorte qu'il couple le composant supplémentaire (28) en tant que composant essentiellement fixé au support au support de dispositif (12) lorsqu'un couple plus petit qu'un couple limite prédéfini agit sur le composant supplémentaire (28) par rapport au support de dispositif (12) et de telle sorte qu'il permet un mouvement relatif entre le composant supplémentaire (28) et le support de dispositif (12) lorsqu'un couple plus grand ou aussi grand qu'un couple limite prédéfini agit sur le composant supplémentaire (28) par rapport au support de dispositif (12), de sorte que le dispositif comprend seulement le premier (32) et le deuxième entraînement pour serrer le premier (48) et le deuxième composant vissé (50) ou/et pour relâcher ou réaliser la connexion vissée.

2. Dispositif selon la revendication 1,
**caractérisé en ce qu'**au moins une came de commande (86, 106) est respectivement prévue en tant que moyen de guidage et de réglage (86, 106) du deuxième dispositif de fixation (24) dans la partie mobile (66) et le composant complémentaire (68), par laquelle une structure de guidage (104) dudit au moins un membre de fixation (84) est en engagement d'appui, en particulier en engagement d'appui de déplacement pendant le déplacement dudit au moins un membre de fixation (84), où de préférence le dispositif est en outre **caractérisé en ce que** la partie mobile (66) est adaptée autour d'un axe de rotation (R66) passant à travers la deuxième région de réception (76) pour exécuter une rotation relative par rapport au composant complémentaire (68), où une came de commande prévue à un composant parmi partie mobile (66) et composant complémentaire (68), de préférence au composant complémentaire (68), en tant que came ce commande d'entraînement (86) comprend un composant dans le sens circonférentiel autour de l'axe de rotation (R66) et un composant radial dans le sens envers l'axe de rotation (R66) et loin de celui-ci, et où à l'autre composant respectif, de préférence à la partie mobile (68), une came de commande en tant que came de guidage (106) est prévue avec un composant dans le sens radial.

3. Dispositif selon la revendication 2,
**caractérisé en ce que** le composant dans le sens circonférentiel de la came de commande d'entraînement (86) est dans une section active (86a) contribuant au déplacement radial dudit au moins un membre de fixation (84) plus grande ou aussi grande que le composant radial de la came ce commande d'entraînement (86) ou/et **en ce que** la came de guidage (106) ne comprend qu'un composant dans le sens radial et aucun composant dans le sens circonférentiel.

4. Dispositif selon une des revendications précédentes,
**caractérisé en ce que** ledit au moins un membre de fixation (84) comprend un rouleau, de préférence un rouleau avec une surface (112) de friction élevée par une augmentation de la rugosité de surface ou/et par un revêtement avec un matériau de revêtement différent du corps de base du rouleau (111), avec des bouts d'axe ou de tige (104) s'étendant axialement du rouleau dans le sens de l'axe de rouleau, qui comprennent les formations de guidage coopérant avec les moyens de guidage et de réglage (86, 106).

5. Dispositif selon la revendication 4,
**caractérisé en ce qu'**à partir du rouleau un bout d'axe ou un bout de tige (104) s'étend à chacun des deux côtés opposés, dont un coopère avec la came de commande (106) prévue à la partie mobile (66) et dont l'autre coopère avec la came de commande (86) prévue au composant complémentaire (68) en tant que structure de guidage.

6. Dispositif selon une des revendications précédentes,
**caractérisé en ce que** la partie mobile (66) comprend un disque s'étendant autour d'un axe de disque (A), de préférence un disque avec une partie centrale comprenant une encoche (80) contribuant à la deuxième région de réception (76), la came de commande (86) de la partie mobile (66) étant prévue dans sa surface frontale orientée dans le sens de l'axe de disque (A), une structure d'engagement (70), de préférence structure d'engagement par complémentarité de forme (70), en particulier par engrenage (70), étant prévue dans sa surface de revêtement radialement extérieure, pour un engagement avec le deuxième entraînement (72) transmettant de la force et du mouvement, où de préférence l'axe de disque (A) correspond à un axe de réception (A) passant à travers la deuxième région de réception (76) et correspond de manière particulière à l'axe de rotation (R66) de la partie mobile (66).

7. Dispositif selon une des revendications précédentes,
**caractérisé en ce qu'**un arrêt mécanique (97) est prévu qui indépendamment de la présence d'un deuxième composant vissé (50) dans la deuxième région de réception (76) limite un mouvement relatif de la partie mobile (66) par rapport au support de dispositif (12), de préférence dans les deux sens.

8. Dispositif selon une des revendications précédentes,
**caractérisé en ce que** l'accouplement (39) agissant en fonction du couple est un accouplement à hystérésis (39) avec une pluralité d'aimants (42) prévue de manière successive à une partie comprenant une partie d'accouplement (40) du support de dispositif (12) et une contrepartie d'accouplement (à 44) du composant supplémentaire (28) opposé à cette dernière à travers l'entrefer (45), le long d'une voie de mouvement relatif entre le support de dispositif (12) et le composant supplémentaire (28), et avec un composant de hystérésis (44) comprenant un matériau non magnétisé magnétisable en permanence et prévu de manière opposée à travers un entrefer respectivement à l'autre partie de partie d'accouplement (40) et contrepartie d'accouplement (à 44) opposé aux aimants (42).

9. Dispositif selon la revendication 8,
**caractérisé en ce que** le composant supplémentaire (28) comprend un disque s'étendant autour d'un axe de disque (A), **en ce qu'**il est de préférence un disque avec une partie centrale comprenant l'axe de disque (A) comprenant une encoche (28a) contribuant à la première région de réception (36) avec une surface frontale orientée dans le sens de l'axe de disque (A) comprenant la contrepartie d'accouplement (à 44) où de préférence l'axe de disque (A) correspond à un axe de réception (A) passant à travers la première région de réception (36) et correspond de manière particulièrement préférée à un axe de rotation relative (R28) du composant supplémentaire (28), autour duquel le composant supplémentaire (28) peut être tourné par rapport au support de dispositif (12) en tant que mouvement relatif.

10. Dispositif selon la revendication 8 ou 9,
**caractérisé en ce que** le composant supplémentaire (28) comprend un disque s'étendant autour d'un axe de disque (A), de préférence un tel disque avec une partie centrale comprenant l'axe de disque (A) comprenant une encoche (28a) contribuant à la première région de réception (36) avec une surface frontale orientée dans le sens de l'axe de disque (A) comprenant une came de commande (110) des moyens de guidage et de réglage (58, 110) du premier dispositif de fixation (22), où de préférence l'axe de disque (A) correspond à un axe de réception (A) passant à travers la première région de réception (36) et correspond de manière particulièrement préférée à un axe de rotation relative (R28) du composant supplémentaire (28), autour duquel le composant supplémentaire (28) peut être tourné par rapport au support de dispositif (12) en tant que mouvement relatif.

11. Dispositif selon une des revendications 9 ou 10,
**caractérisé en ce que** le dispositif comprend au composant supplémentaire (28) à son bord orienté vers l'encoche centrale (28a) un chanfrein d'introduction (52) pour supporter l'introduction de composants de connexion vissée (48, 50) dans la première région de réception (36).

12. Dispositif selon une des revendications précédentes,
**caractérisé en ce que** le composant supplémentaire (28) ou/et la partie d'entraînement (26) ou/et la partie mobile (66) sont prévus de manière rotative autour d'axes de rotation relative (R26, R28, R66) par rapport au support de dispositif (12).

13. Dispositif selon une des revendications précédentes, tenant compte de la revendication 8,
**caractérisé en ce que** la première région de réception (36) ou/et la deuxième région de réception (76) définissent un axe de réception (A) par rapport auquel dans le sens axial la partie d'accouplement (40), le composant supplémentaire (28), la partie d'entraînement (26), le composant complémentaire (68) et la partie mobile (66) sont prévus dans cet ordre, vu d'une extrémité d'introduction (51) du dispositif.

14. Dispositif selon une des revendications précédentes,
**caractérisé en ce que** le dispositif comprend à une de ses extrémités longitudinales un dispositif de serrage (98) qui est adapté pour maintenir dans le dispositif le couvercle de récipient (48) ou/et le corps de récipient (50) après leur introduction dans le dispositif même lorsque le couvercle de récipient (48) ou/et le corps de récipient (50) ne sont pas fixés par les dispositifs de fixation (22, 24).

15. Utilisation d'un dispositif selon une des revendications précédentes pour ouvrir et fermer des connexions vissées entre un couvercle de récipient et un corps de récipient.
